# EUROPEAN PATENT SPECIFICATION

(11) **EP 0 965 404 B1**
(45) Date of publication and mention of the grant of the patent: **17.08.2005**
(21) Application number: 98951716.4
(22) Date of filing: 06.11.1998
(51) Int. Cl.: B23B 27/14, C23C 28/04, C23C 16/36, C23C 30/00

(54) **COATED TOOL OF CEMENTED CARBIDE**
WERKZEUG BESCHICHTET MIT SINTERKARBID
OUTIL ENROBE EN CARBURE FRITTE

(30) Priority: 06.11.1997 JP 30431297; 22.01.1998 JP 1005498; 23.10.1998 JP 30189898; 23.10.1998 JP 30190298
(43) Date of publication of application: 22.12.1999
(73) Proprietor: Sumitomo Electric Industries, Ltd., Osaka-shi, Osaka 541-0041 (JP)
(72) Inventor: MORIGUCHI, Hideki, Itami Works of, Itami-shi, Hyogo 664-0016 (JP); IKEGAYA, Akihiko, Itami Works of, Itami-shi, Hyogo 664-0016 (JP); YAMAGATA, Kazuo, Itami Works of, Itami-shi, Hyogo 664-0016 (JP)
(74) Representative: Cross, Rupert Edward Blount
(86) International application number: PCT/JP1998/005004
(87) International publication number: WO 1999/024198

(56) References cited:
- EP-A- 0 416 824
- EP-A- 0 600 115
- JP-A- 2 311 202
- JP-A- 5 177 411
- JP-A- 6 246 512
- JP-A- 6 246 513
- JP-A- 8 118 105
- JP-A- 9 001 403
- PATENT ABSTRACTS OF JAPAN vol. 1995, no. 10, 30 November 1995 (1995-11-30) & JP 07 188933 A (SUMITOMO ELECTRIC IND LTD), 25 July 1995 (1995-07-25)
- PATENT ABSTRACTS OF JAPAN vol. 018, no. 598 (M-1704), 15 November 1994 (1994-11-15) & JP 06 226509 A (SUMITOMO ELECTRIC IND LTD), 16 August 1994 (1994-08-16)

## Description

### Technical Field

This invention relates to a cutting tool, in particular, which is most suitable as a coated cemented carbide cutting tool used for cutting steels and cast irons and which is excellent in wear resistance as well as breakage resistance.

### Background Technique

Hitherto, cemented carbides (WC-Co alloys or WC-Co alloys to which carbonitrides of Ti, Ta or Nb are added) have been used as a tool material for cutting metallic materials. However, as cutting speeds have lately been increased, a tendency of using cemented carbide tools comprising cemented carbide substrates coated with coated films consisting of carbides, nitrides, carbonitrides, carboxides, boronitrides or oxides of Group IVa, Va and VIa elements of Periodic Table or Al or their solid solutions by CVD or PVD methods in a thickness of 3 to 15 µm is enhancing. The thickness of the coated films tends to further increase and CVD coated cemented carbides with a coating thickness of at least 20 µm have been proposed. In such CVD coated cemented carbide tools, there arises a problem that a tensile residual stress occurs in the coated film during cooling after the coating due to difference in coefficient of thermal expansion between the coated film and substrate, and the breakage resistance of the tool is thus lowered.

For a coated cemented carbide tool, on the other hand, it has been proposed in order to improve its breakage resistance to introduce cracks into a coated film to be penetrated therethrough to a substrate by applying mechanical impact to a surface of a cemented carbide, for example, by blasting (JP-B-7-6066). In this proposed method, it is confirmed that the breakage resistance can be improved to some extent, but because of previously introducing cracks into the coated film to be penetrated therethrough to the substrate, Griffith' precrack length is increased, thus resulting in lowering of the breakage resistance, wear fluctuation of the coated film and deterioration of the wear resistance from the longer cracks.

As described above, the coated cemented carbide tools of the prior art have the problems that when the thickness of a coated film is increased to improve the wear resistance, the breakage resistance of the tool is decreased and even when cracks are previously introduced into a coated film with a relatively large thickness, the wear resistance is rather lowered depending on the cracked state. These problems have not been solved yet.

Under the situation, the present invention aims at providing a coated cemented carbide tool whose both properties of a breakage resistance and wear resistance are improved and service life as a tool is lengthened.

### Disclosure of Invention

In order to achieve the above described object, the inventors have made various studies and consequently, have found that using a cemented carbide alloy consisting of a matrix of WC and a binder phase of an iron group metal, a ceramic film having a specified film quality and structure is coated onto its surface and the lengths and intervals of cracks introduced into the coated film are precisely controlled by a thermal or mechanical procedure, whereby to improve both the properties of a breakage resistance and wear resistance and to lengthen the tool life to a great extent. That is, the present invention comprises specified inventions or embodiments summarized below:
(1) A coated cemented carbide cutting tool comprising a substrate consisting of a matrix of WC and a binder phase of an iron group metal and a plurality of coated layers provided on a surface of the substrate, in which (a) an innermost layer, adjacent to the substrate, of the coated layers consists of titanium nitride having a thickness of 0.1 to 3 µm, preferably 0.3 to 1 µm, (b) on a mirror-polished cross-sectional microstructure of the said tool, an average crack interval in the coated film on a ridge of a cutting edge and/or rake face is smaller than an average crack interval in the coated layer on a flank face, (c) at least 50 %, preferably at least 80 % of the cracks in the coated film on the said ridge of the cutting edge and/or rake face have ends of the cracks in the said innermost titanium nitride layer, in a layer above the titanium nitride or in an interface between these layers and (d) an average crack length in the coated film on the said ridge of the cutting edge is shorter than an average coated film thickness on the flank face.
(2) The coated cemented carbide cutting tool as described in the above (1), wherein the interface between these layers is a interface between the innermost titanium nitride layer and the layer directly above the titanium nitride.
(3) The coated cemented carbide cutting tool as described in the above (1) or (2), wherein the said innermost titanium nitride layer is coated with titanium carbonitride layer of columnar structure with an aspect ratio of at least 5, preferably 10 to 50, having a thickness of 3 to 30 µm, preferably 5 to 15 µm, and further coated with at least one alumina layer of 0.5 to 10 µm, preferably 1 to 8 µm.
(4) The coated cemented carbide cutting tool as described in the above (3), wherein at least 50 %, preferably 80 to 100 % of the cracks in the coated film on the said ridge of the cutting edge and/or rake face have ends of the cracks, at the substrate side, in the said innermost titanium nitride layer, in the said titanium carbonitride layer of columnar structure or in an interface between the said titanium nitride layer and the said titanium carbonitride layer of columnar structure. (The existing amount of the ends of the cracks at the substrate side herein means the total mounts.)
(5) The coated cemented carbide cutting tool as described in the above (1) or (2), wherein the said innermost titanium nitride layer is coated with alumina layer of 3 to 20 µm, further coated with titanium carbonitride layer of columnar structure having a thickness of 3 to 30 µm with an aspect ratio of at least 5 and further coated with alumina layer of 0.5 to 10 µm.
(6) The coated cemented carbide cutting tool as described in any one of the above (1) to (5), wherein the average crack interval in the coated film on the said ridge of the cutting edge and/or rake face is at most 10 µm.
(7) The coated cemented carbide cutting tool as described in any one of the above (1) to (6), wherein when a narrower average crack interval in the coated film of the ridge of the cutting edge or rake face on the said cross-sectional microstructure is X and an average value of the crack intervals in the coated film on the flank face is Y, a value of Y/X satisfies at least 2.
(8) The coated cemented carbide cutting tool as described in any one of the above (1) to (7), wherein at least 50 %, preferably 75 to 100 % of the ends of the cracks at the surface side in the coated film on the said ridge of the cutting edge and/or rake face are not penetrated to the surface of the coated film.
(9) The coated cemented carbide cutting tool as described in any one of the above (2) to (8), wherein at least 50 %, preferably 70 to 100 % of the cracks in the coated film on the said ridge of the cutting edge and/or rake face exist in only the said titanium carbonitride film of columnar structure and are not penetrated to the upper and lower layers thereof.
(10) The coated cemented carbide cutting tool as described in any one of the above (1) to (9), wherein the surface of the said cemented carbide substrate has a β -free layer.
(11) The coated cemented carbide cutting tool as described in any one of the above (1) to (10), wherein the cracks in the coated film on the said ridge of the cutting edge are mechanically introduced after coating.
(12) The coated cemented carbide cutting tool as described in any one of the above (3) to (11), wherein the said titanium carbonitride layer of columnar structure is coated at 800 °C to 1000 °C, preferably, 850 °C to 950 °C by a CVD method comprising using an organo CN compound as a reactant gas.
(13) The coated cemented carbide cutting tool as described in any one of the above (1) to (12), wherein the total thickness of the coated films is in a range of 3 to 50 µm.
(14) A coated cemented carbide cutting tool comprising a substrate consisting of a matrix of WC and a binder phase of an iron group metal and a plurality of coated layers provided on a surface of a substrate, in which (a) an innermost layer, adjacent to the substrate, of the coated layers consists of titanium nitride having a thickness of 0.1 to 3 µm, preferably 0.3 to 1 µm, which is further coated with, as an upper layer, at least one alumina layer of 0.5 to 10 µm, preferably 1 to 8 µm, (b) on a mirror-polished cross-sectional microstructure of the tool, an average crack interval in the coated film on a ridge of a cutting edge is smaller than an average crack interval in the coated layer on a flank face, (c) at least 50 % of the cracks in the coated film on the said ridge of the cutting edge have ends of the cracks, at the substrate side, in the said innermost titanium nitride layer, in a layer above the titanium nitride layer or in an interface between these layers (interface between the titanium nitride layer and a layer directly above it and each interface between the layers in the upper layers), (d) an average crack length in the coated film on the said ridge of the cutting edge is shorter than an average coated film thickness on the flank face and (e) the said alumina layer is removed or polished on at least a part of the ridge of the cutting edge.
(15) The coated cemented carbide cutting tool as described in the above (14), wherein the said innermost titanium nitride layer is further coated with titanium carbonitride layer of columnar structure with an aspect ratio of at least 5, preferably 10 to 50, having a thickness of 3 to 30 µm, preferably 5 to 15 µm, and further coated with at least one alumina layer with a thickness of 0.5 to 10 µm, preferably 1 to 8 µm.
(16) The coated cemented carbide cutting tool as described in the above (15), wherein at least 50 %, preferably 80 to 100 % of the cracks in the coated film on the said ridge of the cutting edge have ends of the cracks, at the substrate side, in the said innermost titanium nitride layer, in the said titanium carbonitride layer of columnar structure or in an interface between the said titanium nitride layer and the said titanium carbonitride layer of columnar structure. (The existing amount of the ends of the cracks at the substrate side herein means the total mounts.)
(17) The coated cemented carbide cutting tool as described in any one of the above (14) to (16), wherein the average crack interval in the coated film on the said ridge of the cutting edge is at most 10 µm.
(18) The coated cemented carbide cutting tool as described in any one of the above (14) to (17), wherein when an average crack interval in the coated film of the ridge of the cutting edge on the said cross-sectional microstructure is X and an average crack interval in the coated film on the flank face is Y, a value of Y/X satisfies at least 2, preferably at least 5.
(19) The coated cemented carbide cutting tool as described in any one of the above (14) to (18), wherein the crack interval in the surface-exposed coated layer A, at which the said alumina layer has been removed, is 0.5 to 5 µm, preferably 1 to 3 µm.
(20) The coated cemented carbide cutting tool as described in any one of the above (15) to (18), wherein the surface-exposed coated layer A, at which the said alumina layer has been removed, consists of titanium carbonitride of a columnar crystal with an aspect ratio of at least 5, preferably 10 to 50, having a thickness of 3 to 30 µm, preferably 5 to 15 µm.
(21) The coated cemented carbide cutting tool as described in any one of the above (14) to (18), wherein the coated layer A provided with cracks whose intervals are in a range of 0.5 to 5 µm, preferably 1 to 3 µm exists under the said alumina polished part.
(22) The coated cemented carbide cutting tool as described in any one of the above (15) to (18), wherein the coated layer A existing under the said alumina-polished part consists of titanim carbonitride layer of columnar structure, with an aspect ratio of at least 5, preferably 10 to 50, having a thickness of 3 to 30 µm, preferably 5 to 15 µm.
(23) The coated cemented carbide cutting tool as described in any one of the above (15) to (20), wherein at least 50 %, preferably 70 to 100 % of the cracks in the coated film on the said ridge of the cutting edge exist on only the said titanium carbonitride layer of columnar structure and are not penetrated through the upper and lower coated layers thereof.
(24) The coated cemented carbide cutting tool as described in any one of the above (14) to (23), wherein the surface of the said cemented carbide substrate has a β -free layer.
(25) The coated cemented carbide cutting tool as described in any one of the above (14) to (20) and (23) to (24), wherein the said removed alumina layer essentially consists of κ -alumina.
(26) The coated cemented carbide cutting tool as described in any one of the above (14) to (18) and (21) to (23), wherein the said polished alumina layer essentially consists of α -alumina.
(27) A coated cemented carbide cutting tool comprising a substrate consisting of a matrix of WC and a binder phase of an iron group metal and a plurality of coated layers provided on a surface of the substrate, in which (a) an innermost layer, adjacent to the substrate, of the coated layers consists of titanium nitride having a thickness of 0.1 to 3 µm, preferably 0.3 to 1 µm, which is further coated with titanium carbonitride layer of columnar structure with an aspect ratio of at least 5, preferably 10 to 50, having a thickness of 3 to 30 µm, preferably 5 to 15 µm, and further coated with at least one alumina layer with a thickness of 0.5 to 10 µm, preferably 1 to 8 µm, (b) on a mirror-polished cross-sectional microstructure of the tool, at least 50 % of ends of cracks at the surface side in the coated film on a ridge of a cutting edge and/or rake face are not penetrated to the surface of the coated film, (c) at least 50 % of the cracks in the coated film on the said ridge of the cutting edge and/or rake face have ends of the cracks, at the substrate side, in the said innermost titanium nitride layer, in a layer above the titanium nitride layer or in an interface between these layers and (d) an average crack length in the coated film on the said ridge of the cutting edge and/or rake face is shorter than an average coated film thickness on the flank face, (e) an average crack inerval in the said titanium carbonitride layer on the said ridge of the cutting edge and/or rake face is at most 10 µm and (f) an average crack interval in the said alumina film on the said ridge of the cutting edge and/or rake face is at least two times as large as an average crack interval in the said titanium carbonitride layer.
(28) The coated cemented carbide cutting tool as described in the above (27), wherein the surface of the said cemented carbide substrate has a β -free layer.
(29) The coated cemented carbide cutting tool as described in the above (27) or (28), wherein the said alumina layer is removed or polished on at least a part of the ridge of the cutting edge.
(30) The coated cemented carbide cutting tool as described in any one of the above (14) to (29), wherein the cracks in the coated film on the said ridge of the cutting edge are mechanically introduced after coating.
(31) The coated cemented carbide cutting tool as described in any one of the above (15) to (30), wherein the said titanium carbonitride layer of columnar structure is coated at 800°C to 1000°C, preferably, 850 °C to 950 °C by a CVD method comprising using an organo CN compound as a reactant gas.
(32) The coated cemented carbide cutting tool as described in any one of the above (14) to (31), wherein the sum of the thickness of the coated layers is in a range of 3 to 50 µm.

Between the said innermost titanium nitride layer and the said titanium carbonitride layer of columnar structure or the alumina layer of the above described (5) or between the said titanium carbonitride layer of columnar structure and the said alumina layer, an intermediate layer can be coated to improve the adhesive strength between these layers. As the intermediate layer, there can be used layers of titanium boronitride, titanium carbide, titanium carboxynitride and the like with a thickness of about 0.1 to 5 µm.

### Brief Description of the Drawings

Fig. 1 is a perspective view of an insert of the present invention to illustrate a edge of a cutting edge, flank face and rake face.
Fig. 2 is a typical plan view of an insert of the present invention.
Fig. 3 is a diagram for showing a positional relationship between ends of cracks and a subatrate in a coated layer of a cemented carbide according to the present invention.
Fig. 4 (a) and (b) respectively are typical cross-sectional views of polished states of alumina layers on mirror-polished cross-sectional microstructures of inserts according to the present invention.
Fig. 5 is a cross-sectional view of a workpiece of SCM 435 (round rod) used for a cutting test in Examples.

### Best Embodiments for carrying out Present Invention

According to the first feature I of the present invention, in a coated cemented carbide cutting tool comprising a substrate consisting of a matrix of WC and a binder phase of an iron group metal, to which a carbonitride of Ti, Ta, Nb, etc. is optionally added, and a plurality of coated layers provided on a surface of the substrate, (a) an innermost layer, adjacent to the substrate, of the coated layers consists of titanium nitride having a thickness of 0.1 to 3 µm, preferably 0.3 to 1 µm, which is further coated with titanium carbonitride layer of columnar structure with an aspect ratio of at least 5, preferably 10 to 50, having a thickness of 3 to 30 µm, preferably 5 to 15 µm, and further coated with at least one alumina layer with a thickness of 0.5 to 10 µm, preferably 1 to 8 µm. (b) On a mirror-polished cross-sectional microstructure of the said tool, an average crack interval in the coated film on the ridge of the cutting edge is rendered smaller than an average crack interval in the coated layer on a flank face. (c) Of the cracks in the coated film on the ridge of the cutting edge and/or rake face, those in which the ends of the cracks, at the substrate side, exist in the said innermost titanium nitride layer, in a layer above the titanium nitride or in an interface between these layers are in a proportion of at least 50 %, preferably 80 to 100 %. In the case of coating the said titanium carbonitride layer of columnar structure onto the said innermost titanium nitride layer, the cracks whose ends exist in the said innermost titanium nitride layer, in the said titanium carbonitride layer of columnar structure or in an interface between the said titanium nitride layer and the said titanium carbonitride layer of columnar structure are in a proportion of at least 50 %, preferably 80 to 100 %. (d) It is important that an average crack length in the coated film on the said ridge of the cutting edge and/or rake face is shorter than an average coated film thickness on the flank face.

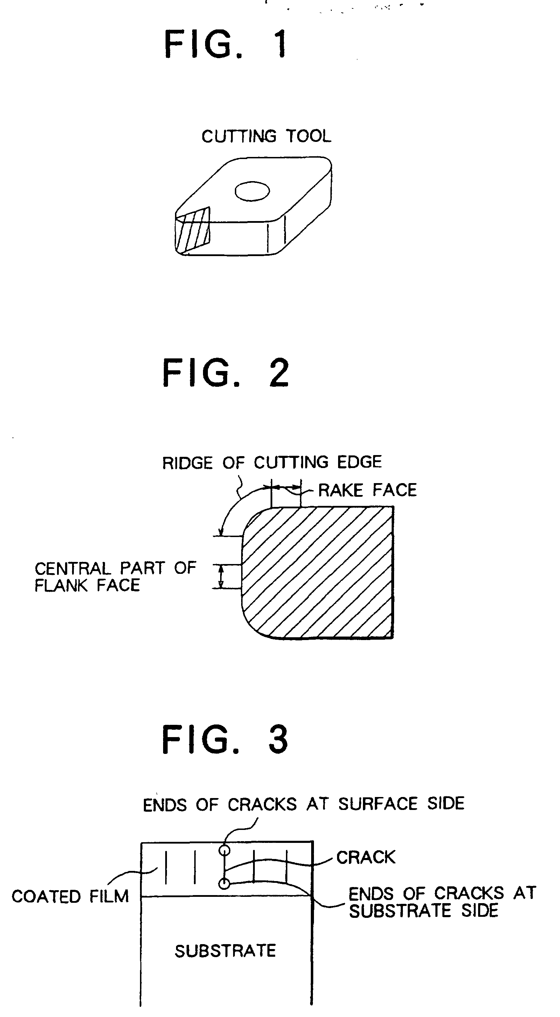

In the above described feature I of the present invention, the grounds for specifying (a) to (d) and other inventions will now be illustrated:
(a) The reason for choosing titanium nitride as the innermost layer consists in that not only the titanium nitride is excellent in adhesive strength to a cemented carbide material, but also is very excellent as a film quality capable of preventing cracks in the coated film from penetration to the substrate. The thickness thereof is specified as above, since if less than 0.1 µm, the effect thereof cannot be expected, while if more than 3 µm, the wear resistance is lowered. The titanium carbonitride film above it is preferably coated from the standpoint of wear resistance and use of a columnar structure with an aspect ratio of at least 5 results in easy introduction of cracks and formation of a tenacious film itself. When the aspect ratio is in a range of 10 to 50, in particular, excellent properties can be expected. The thickness thereof is specified as described above, since if less than 3 µm, the effect of improving the wear resistance becomes smaller, while if more than 30 µm, the breakage resistance is markedly lowered. The alumina layer above it is necessary from the standpoint of suppressing wear on the rake face when subjecting steels to high speed cutting. If the thickness is less than 0.5 µm, the effect thereof is smaller, while if more than 10 µm, the breakage resistance is markedly lowered.
(b) When the average crack interval in the coated film on the ridge of the cutting edge and/or rake face is smaller than an average crack interval in the coated layer on a flank face while observing the cross-sectional microstructure of the tool after mirror-polishing by means of an optical microscope or scanning electron microscope, the breakage resistance during intermittent cutting is improved and in addition, breaking, falling-off or peeling phenomena of the films due to excessive introduction of cracks into coated film on the flank face, on which the wear resistance is dependent, can be suppressed. This is preferable. In particular, these effects remarkably appear when a value of Y/X satisfies at least 2, wherein a narrower average crack interval in the coated film of the ridge of the cutting edge or rake face on the cross-sectional microstructure is X and an average crack interval in the coated film on the flank face is Y.
   In this specification, the ridge of the cutting edge means a central part of the ridge of the cutting edge (range of upto a connection part with a rake face or flank face), the flank face means a central part of the flank face and the rake face means a position of approaching by 0 to 100 µm from the connection part of the ridge of the cutting edge with the rake face to the rake face side (Cf. Fig. 1 and Fig. 2). The above described observation of the cross-sectional microstructure by the optical microscope or scanning electron microscope is carried out to estimate an introduced state of cracks by photographing a designated site of the coated film by a length of about 50 to 100 µm and utilizing the same. When the number of the cracks introduced are smaller in the observed visual field, the visual field is lengthened. The cracks herein referred mean cracks introduced in the vertical direction to the coated film surface by a length of at least 1/2 of the film thickness of each coated layer (Cf. Fig. 3). This is probably due to the fact that when cracks each having a crack length of at least 1/2 of the thickness of each layer are introduced, in particular, the film of each layer is rendered tenacious to imrpove cutting property. In addition, when the average crack intervals in the coated layers respectively differ, the smallest average crack interval is acknowledged as the average crack interval of the present invention.
   The cracks referred in the present invention include cracks introduced during grinding or mirror-polishing, which crack leangths or crack intervals can be measured by the above described measurement method or a method mentioned in the following Examples.
(c) When, of the cracks in the coated film on the ridge of the cutting edge and/or rake face, those in which the ends of the cracks, at the substrate side, exist in the said innermost titanium nitride layer, in the said titanium carbonitride layer of columnar structure or in an interface between the said titanium nitride layer and the said titanium carbonitride layer of columnar structure are in a proportion of at least 50 %, the proportion of cracks penetrated to the substrate is small so that such a phenomenon can be suppressed that the cemented carbide substrate tends to break or fracture from the cracks penetrated through the substrate, as a stress-concentrated source, during intermittent cutting or the cemented carbide directly below the coated film is broken to peel off the coated film and lower the wear resistance. In this case, a proportion of at least 80 % is particularly preferred. Because of the above described reason, this specifying includes also a case where the ends of the cracks, at the substrate side, exist in the interface between the innermost titanium nitride layer and substrate, and are not penetrated to the substrate.
(d) When the average crack length in the coated film on the said ridge of the cutting edge and/or rake face is shorter than the average coated thickness on the flank face, the cracks penetrated from the surface to the substrate are decreased and breakage of the cemented carbide substrate due to oxidation of the cemented carbide substrate at the ends of the cracks penetrated through the substrate during cutting at high speed and increase of wearing due to peeling of the film can be suppressed. This is preferred.

Furthermore, when the said innermost titanium nitride layer is further coated with alumina layer of 3 to 20 µm, further coated with titanium carbonitride layer of columnar structure with an aspect ratio of at least 5, having a thickness of 3 to 30 µm, and further coated with alumina layer of 0.5 to 10 µm, a wear resistance can be satisfied both at high speeds and low speeds. The reason for limiting the thickness of the inner alumina layer to 3 to 20 µm consists in that if thinner than 3 µm, its effect is less, while if thicker than 20 µm, the breakage resistance is largely deteriorated. The reason for limiting the thickness of the outer alumina layer to 0.5 to 10 µm consists in that if thinner than 0.5 µm, its effect is less, while if thicker than 10 µm, the wear resistance is deteriorated.

When the average crack interval in the coated film on the said ridge of the cutting edge and/or rake face is at most 10 µm, furthermore cutting stress loaded on the ridge of the cutting edge can be prevented from concentration on specified crack ends, that is, the stress can be dispersed, thus improving the breakage resistance, suppressing abnormal abrasion and improving the wear resistance.

When, of the cracks in the coated film on the ridge of the cutting edge and/or rake face, those in which the ends of the cracks, at the surface side, are not penetrated to the surface of the coated film exist in a proportion of at least 50 %, a rapid abrasion-increasing phenomenon due to deterioration of the film quality, breakage of the film and peeling of the film, which are caused by a high temperature generated during high speed cutting and then through oxidation of the coated film, can be suppressed.

During the same time, in particular, when at least 50 % of the cracks in the coated film on the said ridge of the cutting edge exists in only the said titanium carbonitride layer of columnar structure and are not penetrated to the upper and lower layers thereof, the cracks are hardly propagated in parallel to the film surface and hardly integrated with each other even under such a cutting condition that impacts are repeatedly loaded as in intermittent cutting and a rapid wear-increasing phenomenon due to adhesion breakage resulting from chipping of the film and due to peeling of the film can be suppressed, because grain shape of the titanium carbonitride layer of columnar structure is columnar.

In the coated cemented carbide having the above described feature I according to the present invention, the total film thickness of the coatings is preferably in a range of 3 to 50 µm.

When the surface of the said cemented carbide has a β -free layer (layer having no other precipitates than WC and a binder metal), cracks are hard to be propagated and the breakage resistance can further be improved because of improved toughness on the surface area of the cemented carbide when the cracks are allowed to progress through the substrate by cutting stress. Furthermore, when there is a higher hardness area directly below the β -free layer, than hardness inside the alloy, balance of the breakage resistance and wear resistance is improved. The β -free layer can be obtained by sintering a cemented carbide composition powder containing a nitride and/or carbonitride in a denitrization atmosphere, e.g. in vacuum. Its thickness is preferably 5 to 50 µm.

According to the second feature II of the present invention, in a coated cemented carbide cutting tool comprising a substrate consisting of a matrix of WC and a binder phase of an iron group metal, optionally further containing a carbonitirde of Ti, Ta, Nb, etc., and a plurality of coated layers provided on a surface of the substrate, (a) an innermost layer, adjacent to the substrate, of the coated layers consists essentially of titanium nitride having a thickness of 0.1 to 3 µm, preferably 0.3 to 1 µm, which is further coated with at least one alumina layer having a thickness of 0.5 to 10 µm, preferably 1 to 5 µm. Preferably, titanium carbonitride layer of columnar structure with an aspect ratio of at least 5, preferably 10 to 50, having a thickness of 3 to 30 µm, preferably 5 to 15 µm is further coated between the said titanium nitride and the said alumina. (b) On a mirror-polished cross-sectional microstructure of the said tool, an average crack interval in the coated film on the ridge of the cutting edge is rendered smaller than an average crack interval in the coated layer on a flank face. (c) Of the cracks in the coated film on the ridge of the cutting edge and/or rake face, those in which the ends of the cracks, at the substrate side, exist in the said innermost titanium nitride layer, in a layer above the titanium nitride or in an interface between these layers are in a proportion of at least 50 %, preferably 80 to 100 %. In the case of coating the said titanium carbonitride layer of columnar structure onto the said innermost titanium nitride layer, the cracks whose ends exist in the said innermost titanium nitride layer, in the said titanium carbonitride layer of columnar structure or in an interface between the said titanium nitride layer and the said titanium carbonitride layer of columnar structure exist in a proportion of at least 50 %, preferably 80 to 100 %. (d) An average crack length in the coated film on the said ridge of the cutting edge is shorter than an average coated film thickness on the flank face. (e) It is herein important that at least one layer of the said alumina layers is removed at least on a part of the ridge of the cutting edge.

In the third feature III of the present invention, the above described (a) to (d) are similarly accepted and as (e), it is important that the said alumina layer is polished at least on a part of the ridge of the cutting edge.

In the above described features II and III, the grounds for specifying (a) to (e) and other inventions will now be illustrated.
(a) The reason for choosing titanium nitride as the innermost layer consists in that not only the titanium nitride is excellent in adhesive strength to a cemented carbide material, but also is very excellent as a film quality capable of preventing cracks in the coated film from penetration to the substrate. The thickness thereof is specified as above, since if less than 0.1 µm, the effect thereof cannot be expected, while if more than 3 µm, the wear resistance is lowered. Further, the alumina film above it is necessary from the standpoint of suppressing wear on the rake face when subjecting steels or cast irons to high speed cutting. If the thickness is less than 0.5 µm, the effect thereof is smaller, while if more than 10 µm, the breakage resistance is markedly lowered. A particularly preferred range is 1 to 5 µm. (In feature III, a preferred range is 3 to 8 µm.) In this case, a plurality of alumina layers can be provided, which can optionally be sandwich-wise laminated with TiN, TiCN, TiC, TiBN, TiBNO layers, etc. Furthermore, inside the alumina layer can suitably be provided each layer of TiC, TiBN, TiN, TiBNO, TiCO and TiCNO and outside the alumina layer can suitably be provided each layer of TiCN, TiBN and TiN. In the case of providing a TiCNO layer between a TiCN layer and an Al₂O₃ layer, for example, the TiCNO layer serves to increase the adhesive strength of both the layers and the TiN layer outside the alumina layer serves to classify by coloring a used corner during cutting or improve a value as a commercial article by rendering golden. As an adjacent layer to the innermost TiN layer, there can be provided each layer of TiC, TiBN, TiCNO and TiCO in addition to the TiCN and Al₂O₃ layers. More preferably, a titanium carbonitride layer is coated between the said titanium nitride layer and the said alumina layer. This titanium carbonitride layer is preferably coated from the standpoint of wear resistance and use of a columnar structure layer with an aspect ratio of at least 5 results in easy introduction of cracks and formation of a tenacious film itself. When the aspect ratio is in a range of 10 to 50, in particular, excellent properties can be expected. The thickness thereof is specified as described above, since if less than 3 µm, the effect of improving the wear resistance becomes smaller, while if more than 30 µm, the breakage resistance is markedly lowered. As the above described Al₂O₃, any crystal type can be used, but depending on the object, κ-Al₂O₃ or α-Al₂O₃ can properly be used since κ-Al₂O₃ can readily be removed while α-Al₂O₃ having a higher toughness than κ-Al₂O₃ is hard to be removed.
(b) When the average crack interval in the coated film on the ridge of the cutting edge is smaller than an average crack interval in the coated layer on a flank face while observing the cross-sectional microstructure of the tool after mirror-polishing by means of an optical microscope or scanning electron microscope, the breakage resistance during intermittent cutting is improved and in addition, breaking, falling-off or peeling phenomena of the films due to excessive introduction of cracks into coated film on the flank surface, on which the wear resistance is dependent, can be suppressed. This is preferable. In particular, these effects remarkably appear when a value of Y/X satisfies at least 2, when a narrower average crack interval in the coated film of the ridge of the cutting edge or rake face on the cross-sectional microstructure is X and an average crack interval in the coated film of the flank face is Y.
   In this specification, the ridge of the cutting edge means a central part of the ridge of the cutting edge (range of upto a connection part with a rake face or flank face), the flank face means a central part of the flank face and the rake face means a position of approaching by 0 to 100 µm from the connection part of the ridge of the cutting edge with the rake face to the rake face side (Cf. Fig. 1 and Fig. 2). The above described observation of the cross-sectional microstructure by the optical microscope or scanning electron microscope is carried out to estimate an introduced state of cracks by photographing a designated site of the coated film by a length of about 50 to 100 µm and utilizing the same. When the number of the cracks introduced are smaller in the observed visual field, the visual field is lengthened and when the designated site has a length of only less than 50 µm, only a measurable distance is to be employed as a measuring visual field. The cracks herein referred mean cracks introduced in the vertical direction to the coated film surface by a length of at least 1/2 of the film thickness of each coated layer (Cf. Fig. 3). This is probably due to the fact that when cracks each having a crack length of at least 1/2 of the thickness of each layer are introduced, in particular, the film of each layer is rendered tenacious to imrpove cutting property. In addition, when the average crack intervals in the coated layers respectively differ, the smallest average crack interval is acknowledged as the average crack interval of the present invention.
   The cracks referred in the present invention include cracks introduced during grinding or mirror-polishing, which crack leangths or crack intervals can be measured by the above described measurement method or a method mentioned in the following Examples.
(c) When, of the cracks in the coated film on the ridge of the cutting edge, those in which the ends of the cracks, at the substrate side, exist in the said innermost titanium nitride layer, in the said titanium carbonitride layer of columnar structure or in an interface between the said titanium nitride layer and the said titanium carbonitride layer of columnar structure exist in a proportion of at least 50 %, the proportion of cracks penetrated to the substrate is small so that such a phenomenon can be suppressed that the cemented carbide substrate tends to break or fracture from the cracks penetrated through the substrate, as a stress-concentrated source, during intermittent cutting or the cemented carbide directly below the coated film is broken to peel off the coated film and to lower the wear resistance. In this case, a proportion of at least 80 % is particularly preferred. Because of the above described reason, this specifying includes also a case where the ends of the cracks, at the substrate side, exist in the interface between the innermost titanium nitride layer and the substrate and are not penetrated to the substrate.
(d) When the average crack length in the coated film of the said ridge of the cutting edge is shorter than the average coated film thickness of the flank face, the cracks penetrated from the surface to the substrate are decreased and breakage of the cemented carbide substrate due to oxidation of the cemented carbide substrate at the ends of the cracks penetrated through the substrate during cutting at high speed and increase of wearing due to peeling of the film can be suppressed. This is preferred.
   When the average crack interval in the coated film on the said ridge of the cutting edge is at most 10 µm, furthermore, cutting stress loaded at the ridge of the cutting edge can be prevented from concentration on the specified crack ends, that is, the stress can be dispersed, thus improving the breakage resistance, suppressing abnormal abrasion and improving the wear resistance. This is particularly preferable.
   In the above described features II, the grounds for specifying (e) will now be illustrated.
(e) At least one of the said alumina layers is removed or polished on at least a part of the ridge of the cutting edge, for example, by a polishing method using a brush carrying or containing abrasive grains or elastic abrasive wheel, barrel treatment method or blast treatment method. These treatments serve to prevent the coated film from peeling and improve the breakage resistance as well as the wear resistance. Partial removal of the alumina layer results in suppressing of an adhesion phenomenen of a workpiece to the cutting edge, hindering of a flow of adhesion → increase of cutting resistance → fracture of the film and supppressing of breakage of the alumina layer and abnormal wearing due to friction of broken alumina grains with the flank face.

The removal method can preferably be carried out in such a manner as extending to the whole ridge of the cutting edge.

Judgment as to whether the alumina layer is removed or not can be carried out by not only observing a tool surface by SEM and photographing a composition image or subjecting to EDS (energy dispersive spectroscopy) but also subjecting a cross-section of an alloy to analysis with an optical microscope, SEM or EDS after polishing or lapping the same.

In the above described features III, the grounds for specifying (e) will now be illustrated.

(e) The said alumina layer is removed or polished on at least a part of the ridge of the cutting edge, for example, by a polishing method using a brush carrying or containing abrasive grains or elastic abrasive wheel, barrel treatment method or blast treatment method. These treatments serve to prevent the coated film from peeling and to improve the breakage resistance as well as the wear resistance. The alumina film is rendered flat by polishing a part of the alumina layer to smoothen a flow of chips, whereby a flow of adhesion → increase of cutting resistance → fracture of the film is hard to be caused, breakage of the alumina layer and abnormal wearing due to friction of broken alumina grains with the flank face can be suppressed.

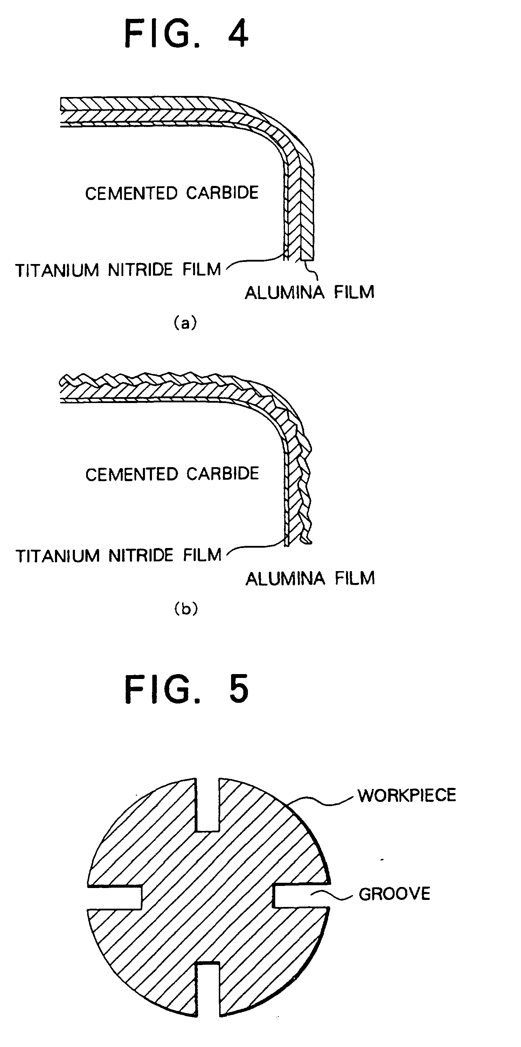

The removal method can preferably be carried out in such a manner as extending to the whole ridge of the cutting edge. Judgment as to whether there is a polished area on the alumina layer or not can be carried out by observing a tool surface, for example, by SEM to judge whether there are hardly distinguishable parts on grain diameters or grain boundaries or not, whether on a mirror-polished, cross-sectional microstructure, the film thickness of the alumina layer on the ridge of the cutting edge is thinner than the film thickness of the alumina layer on the flank face or rake face or not [Cf. Fig. 4 (a)] or whether on a mirror-polished, cross-sectional microstructure, the roughness of the alumina layer on the ridge of the cutting edge is smaller than the roughness of the alumina film on the flank face or rake face or not [Cf. Fig. 4 (b)].

Moreover, the degree of polishing should preferably be in a range of 5 to 99 %, more preferably 30 to 95 % of the thickness of the alumina layer.

In the feature (II) of the present invention, when the crack interval in the surface-exposed coated layer A, at which the said alumina layer has been removed, is 0.5 to 5 µm, in particular, the anti-adhesive property and wear resistance are excellent and the breakage resistance is remarkably improved. This is particularly preferable.

In the feature II of the present invention, when the surface-exposed coated layer A, at which the said alumina layer has been removed, consists of titanium carbonitride layer of columnar structure with an aspect ratio of at least 5, preferably 10 to 50, having a thickness of 3 to 30 µm, or when at least 50 % of the cracks in the coated film on the said ridge of the cutting edge exist on only the said titanium carbonitride layer of columnar structure and are not penetrated through the upper and lower coated layers thereof, the cracks are hardly propagated in parallel to the film surface and hardly integranted with each other even under such a cutting condition that impacts are repeatedly loaded as in intermittent cutting and a rapid wear-increasing phenomenon due to adhesion breakage resulting from chipping of the film and due to peeling of the film can be suppressed, because grain shape of the titanium carbonitride film consisting of the said columnar structure are columnar.

In the coated cemented carbide having the feature II or III according to the present invention, the total thickness of the coatings is preferably in a range of 3 to 50 µm.

In the feature III of the present invention, when there is the coated layer A having a crack interval of 0.5 to 5 µm below the said alumina polished layer, in particular, the anti-adhesive property and wear resistance are excellent and the breakage resistance is remarkably improved. Thus, this is preferable.

In the feature III of the present invention, when the coated layer A, existing under the said alumina polished part, consists of titanium carbonitride layer of columnar structure with an aspect ratio of at least 5, preferably 10 to 50, having a thickness of 3 to 30 µm or when at least 50 % of the cracks in the coated film on the said ridge of the cutting edge exist on only the said titanium carbonitride layer of columnar structure and is not penetrated through the upper and lower coated layers thereof, the cracks are hardly propagated in parallel to the film surface and hardly integrated with each other even under such a cutting condition that impacts are repeatedly loaded as in intermittent cutting and a rapid wear-increasing phenomenon due to adhesion breakage resulting from chipping of the film and due to peeling of the film can be suppressed, because grain shape of the titanium carbonitride layer consisting of the said columnar structure are columnar.

In the coated cemented carbide having the feature II or III according to the present invention, the total thickness of the coatings is preferably in a range of 3 to 50 µm.

Similarly to the present invention having the feature I, in the feature II or III, when the surface of the said cemented carbide has also a β-free layer (layer having no other precipitates than WC and a binder metal), cracks are hard to be propagated and the breakage resistance can further be improved because of improved toughness on the surface area of the cemented carbide while the cracks are allowed to progress through the substrate by cutting stress. Furthermore, when there is a higher hardness area directly below the β-free layer, than hardness inside the alloy, balance of the breakage resistance and wear resistance is improved. The β-free layer can be obtained by sintering a cemented carbide composition powder containing a nitride and/or carbonitride in a denitrization atmosphere, e.g. in vacuum. Its thickness is preferably 5 to 50 µm.

In the feature II of the present invention, as the removed alumina layer, it is preferable in order to remove uniformly the alumina layer on the ridge of the cutting edge to choose κ-alumina capable of readily forming uniformly fine grains and being also excellent in wear resistance on a flank face during steel cutting.

On the other hand, in the feature III of the present invention, as the said polished alumina layer, it is preferable to choose α-alumina being excellent in strength and less in falling-off of grains during polishing and capable of exhibiting excellent wear resistance on a flank face during cast iron cutting.

According to the fourth feature IV of the present invention, in a coated cemented carbide cutting tool comprising a substrate consisting of a matrix of WC and a binder phase of an iron group metal and a plurality of coated layers provided on a surface of the substrate, (a) an innermost layer, adjacent to the substrate, of the coated layers consists essentially of titanium nitride having a thickness of 0.1 to 3 µm, preferably 0.3 to 1 µm, which is further coated with titanium carbonitride layer of columnar structure with an aspect ratio of at least 5, preferably 10 to 50, having a thickness of 3 to 30 µm, preferably 5 to 15 µm and further coated with at least one alumina layer with a thickness of 0.5 to 10 µm, preferably 1 to 8 µm, and (b) it is importnat that on a mirror-polished cross-sectional microstructure of the said tool, at least 50 % of ends of cracks at the surface side in the coated film on the ridge of the cutting edge and/or rake face are not penetrated to the surface of the coated film. (c) At least 50 % of the cracks in the coated film on the said ridge of the cutting edge and/or rake face have ends of the cracks, at the substrate side, in the said innermost titanium nitride layer, in a layer above the titanium nitride layer or in an interface between these layers, (d) an average crack length in the coated film on the said ridge of the cutting edge and/or rake face is shorter than an average coated film thickness on the flank face, and (e) an average crack inerval in the said titanium carbonitride layer on the said ridge of the cutting edge and/or rake face is at most 10 µm. In this case, an important element is that (f) an average crack interval in the said alumina layer on the said ridge of the cuttingedge and/or rake face is at least two times as large as an average crack interval in the said titanium carbonitride layer. In the above described fourth feature IV of the present invention, the grounds for specifying (a) to (f) will now be illustrated:
(a) The reason for choosing titanium nitride as the innermost layer consists in that not only the titanium nitride is excellent in adhesive strength to a cemented carbide material, but also is very excellent as a film quality capable of preventing cracks in the coated film from penetration to the substrate. The thickness thereof is specified as above, since if less than 0.1 µm, the effect thereof cannot be expected, while if more than 3 µm, the wear resistance is lowered. The titanium carbonitride layer above it is preferably coated from the standpoint of wear resistance and use of a columnar structure with an aspect ratio of at least 5 results in easy introduction of cracks and formation of a tenacious film itself. When the aspect ratio is in a range of 10 to 50, in particular, excellent properties can be expected. The thickness thereof is specified as described above, since if less than 3 µm, the effect of improving the wear resistance becomes smaller, while if more than 30 µm, the breakage resistance is markedly lowered. The alumina layer above it is necessary from the standpoint of suppressing wear on the rake face when subjecting steels to high speed cutting. If the thickness is less than 0.5 µm, the effect thereof is smaller, while if more than 10 µm, the breakage resistance is markedly lowered.
(b) When, of the cracks in the coated film on the said ridge of the cutting edge and/or rake face, those in which the ends of the cracks, at the surface side, are not penetrated to the surface of the coated film exist in a proportion of at least 50 %, a rapid wear-increasing phenomenon due to deterioration of the film quality, breakage of the film and peeling of the film, which are caused by a high temperature generated during high speed cutting and then through oxidation of the coated film, can be suppressed. This is preferable.
(c) When, of the cracks in the coated film on the ridge of the cutting edge and/or rake face, those in which the ends of the cracks, at the substrate side, exist in the said innermost titanium nitride layer, in the said titanium carbonitride layer of columnar structure or in an interface between the said titanium nitride layer and the said titanium carbonitride layer of columnar structure are in a proportion of at least 50 %, the proportion of cracks penetrated to the substrate is small so that such a phenomenon can be suppressed that the cemented carbide substrate tends to break or fracture from the cracks penetrated through the substrate, as a stress-concentrated source, during intermittent cutting or the cemented carbide directly below the coated film is broken to peel the coated film and lower the wear resistance. In this case, a proportion of at least 80 % is particularly preferred. Because of the above described reason, this specifying includes also a case where the ends of the cracks, at the substrate side, exist in the interface between the innermost titanium nitride layer and the substrate and are not pene trated to the substrate.
(d) When the average crack length in the coated film on the said ridge of the cutting edge and/or rake face is shorter than the average coated film thickness on the flank face, the cracks penetrated from the surface to the substrate are decreased and breakage of the cemented carbide substrate due to oxidation of the cemented carbide substrate at the ends of the cracks penetrated through the substrate during cutting at high speed and increase of wearing due to peeling of the film can be suppressed. This is preferred.
(e) When the average crack interval in the coated film on the said ridge of the cutting edge and/or rake face is at most 10 µm, furthermore, cutting stress loaded at the ridge of the cutting edge can be prevented from concentration on the specified crack ends, that is, the stress can be dispersed, thus improving the breakage resistance, suppressing abnormal wear and improving the wear resistance. This is particularly preferable.
(f) When the average crack interval in the said alumina layer existing outside the said titanium carbonitride layer is at least two times as large as the average crack interval in the said titanium carbonitride layer, deterioration of the film quality due to oxidation of the titanium carbonitride layer during high speed cutting, breakage of the film and wear-increasing phenomenon due to peeling of the film can be suppressed by a mechanical strength improving effect obtained by introducing a number of cracks into the titanium carbonitride layer and and a wider crack interval introduced into the alumina layer, whereby both the breakage resistance and wear resistance can well be satisfied.

In the present invention, the cracks in the coated films on the said ridge of the cutting edge can be introduced in mechanical manner after coating and the coated cemented carbide cutting tool of the present invention can be produced by controling the degree of a mechanical impact. As a means of imparting such a mechanical impact, for example, there are employed, in addition to blasting, methods of polishing by an abrasive grain-adhered brush or elastic grindwheel, by barrel-treating, etc. In the case of carrying out such a treatment for an insert with a hole, for example, there is a tendency of causing differences in cracked states between a coated film on an inner surface in a hole and other coated films on a rake face, ridge of cutting edge and flank face, because the coated film on the inner surface in the hole is hard to be treated.

When the foregoing titanium carbonitride layer of columnar structure is coated by a CVD method comprising using, as a reactant gas, an organo CN compound such as acetonitrile (CH₃CN), succinonitrile, tolunitrile, acrylonitrile, butyronitrile or the like at a temperature of 800 to 1000 °C, the titanium carbonitride layer tends to be a columnar structure with an aspect ratio of at least 5, into which the cracks of the present invention can readily be introduced. Thus, this method is preferably accepted.

The present invention will now be illustrated in detail without limiting the same.

### (Example 1)

A cemented carbide powder with a composition comprising, by weight, 86 % WC - 3 % TaC - 1 % NbC - 2 % TiC - 1 % ZrC - 7 % Co was pressed, sintered in vacuum at 1400 °C for 1 hour and subjected to a surface grinding treatment and cutting edge treatment to prepare a cemented carbide insert with a Form No. ISO and a shape of CNMG 120408. This insert was coated with the following three kinds of coated films, respetively, in order from the lower layer by a CVD method:
Film Quality ① : 0.5 µm TiC - 10 µm TiCN (aspect ratio 3) - 0.5 µm TiBN - 2 µm α-alumina (total film thickness 13 µm)
Film Quality ② : 0.5 µm TiN - 10 µm TiCN (aspect ratio 3) - 0.5 µm TiBN - 2 µm α -alumina (total film thickness 13 µm)
Film Quality ③ : 0.5 µm TiN - 10 µm TiCN (aspect ratio 7) - 0.5 µm TiBN - 2 µm α-alumina (total film thickness 13 µm)

When coating a TiCN layer of Film Quality ③, acetonitrile was used as an organo CN compound and coated at 900 °C to form a TiCN layer of columnar structure with an aspect ratio of about 7. Any film quality was formed using H₂S gas as an additive gas when coating an alumina film in such a manner that the film thickness be uniform on the ridge of the cutting edge and central part of the flank face. In any film quality, accordingly, the coated film thickness was about 13 µm throughout the rake face, ridge of the cutting edge and central part of the flank face.

Furthermore, the surface of this coated cemented carbide was subjected to shot blasting while changing the size, projection speed, projection angle and projection time of the iron ball to prepare insert samples differing in cracked states in the coated films as shown in Table 1. The state of cracks in the coated film was quantified by cutting each sample of the coated cemented carbides by a diamond wheel, burying in a resin in such a manner that the cut surface was well seen, subjecting the cut surface to surface grinding of a thickness of about 300 µm, using Diamond Wheel # 140 as a grinding disk under conditions of a grinding speed of 30 m/sec, feed speed of 20 cm/sec, cutting depth of 4 µm (initial stage), 2 µm (middle stage) and 1 µm (latter stage), further to rough polishing by a polishing disk with Diamond Paste # 1500 (mean grain diameter 11.5 to 8.9 µm) and then to finish-polishing with Diamond Paste # 3000 (mean grain diameter 5.9 to 4.7 µm, JIS R 6001) and observing the finish-polished surface using an optical microscope with a magnification of 1500 times.

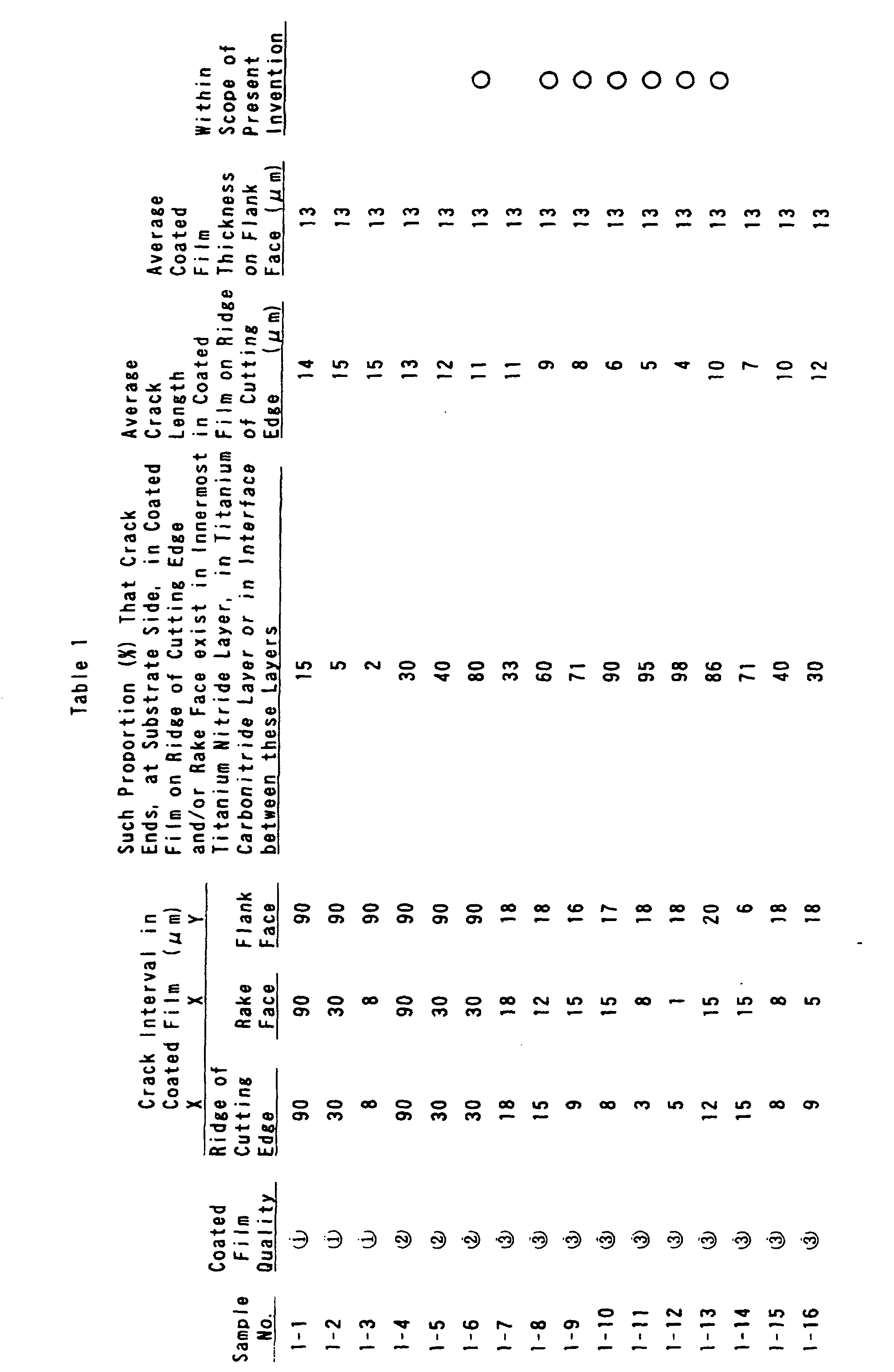

Using these inserts, a workpiece of SCM 435, shown in Fig. 5 (round rod provided with four grooves for intermittent cutting), was subjected to cutting under the following conditions to estimate the breakage resistance of each tool sample and Wear Resistance Test 1 was carried out as to a workpiece SCM 435 under the following conditions:

| Fracture Strength Test 1 | |
|---|---|
| Cutting Speed | 150 m/min |
| Feed | 0.4 mm/rev |
| Cutting Depth | 2 mm |
| Cutting Oil | dry process |
| Holder Used | PCLNR 2525-43 |

Judgment of the service life was effected at the time when fracture took place and the life time was measured by four corner average.

| Wear Resistance Test 1 | |
|---|---|
| Cutting Speed | 300 m/min |
| Feed | 0.3 mm/rev |
| Cutting Depth | 1.5 mm |
| Cutting Time | 30 minutes |
| Cutting Oil | wet process |
| Holder Used | PCLNR 2525-43 |

The results are shown in Table 2, from which it is apparent that the inserts of the present invention, Sample Nos. 1-6 and 1-8 to 1-13, in which Film Qualities ② and ③ comprising the lowermost layer consisting of 0.5 µm TiN and, as a layer above it, 10 µm TiCN film of a columnar structure with an aspect ratio of 3 to 7 [capable of satisfying Construction Element (a) of the foregoing Invention (1)] are coated and the state of cracks satisfies Construction Elements (b), (c) and (d) of the foregoing Invention (1), exhibit more excellent breakage resistance and wear resistance, as compared with Sample Nos. 1-1 to 1-3 whose lowermost layer does not consist of TiN and Sample Nos. 1-4, 1-5, 1-7 and 1-14 to 1-16, which consist of Film Qualities ② and ③, but do not satisfy any one of Construction Elements (b), (c) and (d).

Above all, Sample Nos. 1-9 to 1-12 within the scope of the present invention, in which the average crack interval in the coated film on the ridge of the cutting edge is at most 10 µm, in particular, exhibit more excellent breakage resistance and wear resistance.

Furthermore, Sample Nos. 1-10, 1-11 and 1-12 within the scope of the present invention having a value of Y/X of at least 2 (average crack interval X in coated film on ridge of cutting edge and average crack interval Y in coated film on flank face) exhibit particularly excellent breakage resistance and wear resistance.

**Table 2**

| Sample No. | Construction Elements Satisfied | | | | Y/X | Breakage Resistance Test 1 Life (sec) | Wear Resistance Test 1 Average Flank Wear Width (mm) | Within Scope of Our Invention |
|---|---|---|---|---|---|---|---|---|
| | (a) | (b) | (c) | (d) | | | | |
| 1-1 | × | × | × | × | 1 | 2 | 0.34 | |
| 1-2 | × | ○ | × | × | 3 | 5 | 0.35 | |
| 1-3 | × | ○ | × | × | 11.3 | 9 | 0.38 | |
| 1-4 | ○ | × | × | × | 1 | 3 | 0.29 | |
| 1-5 | ○ | ○ | × | ○ | 3 | 8 | 0.22 | |
| 1-6 | ○ | ○ | ○ | ○ | 3 | 29 | 0.21 | ○ |
| 1-7 | ○ | × | × | ○ | 1 | 11 | 0.48 | |
| 1-8 | ○ | ○ | ○ | ○ | 1.5 | 33 | 0.19 | ○ |
| 1-9 | ○ | ○ | ○ | ○ | 1.8 | 45 | 0.19 | ○ |
| 1-10 | ○ | ○ | ○ | ○ | 2.1 | 58 | 0.17 | ○ |
| 1-11 | ○ | ○ | ○ | ○ | 6.0 | 67 | 0.16 | ○ |
| 1-12 | ○ | ○ | ○ | **○** | 18.0 | 75 | 0.17 | ○ |
| 1-13 | ○ | ○ | ○ | ○ | 1.7 | 37 | 0.19 | ○ |
| 1-14 | ○ | × | ○ | ○ | 0.4 | 23 | 0.38 | |
| 1-15 | ○ | ○ | × | ○ | 2.3 | 10 | 0.21 | |
| 1-16 | ○ | ○ | × | ○ | 3.6 | 4 | 0.22 | |

### (Example 2)

An insert of the same cemented carbide having a Form No. ISO and a shape of CNMG 120408 as that of Example 1 was prepared. This insert was coated with Coated Film Quality ③ described in Example 1 and subjected to a blasting treatment of the surface of the coated cemented carbide using iron powder of about 100 µm in grain size from the rake face side while changing a projection speed of the iron powder to prepare various inserts differing in cracked state in the coated film, as shown in Table 3. Using these inserts, the same cutting test as that of Example 1 was carreid out.

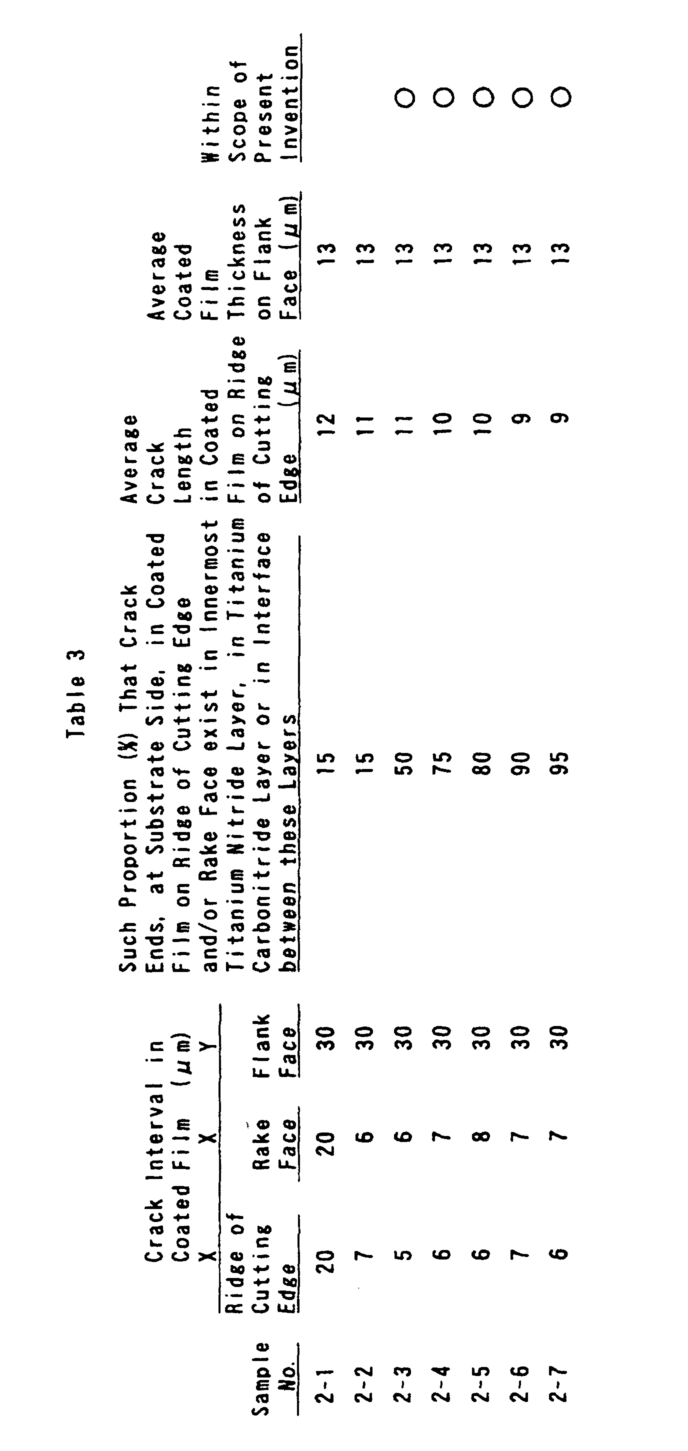

The results are shown in Table 4. The inserts of Sample Nos. 2-3 to 2-7 within the scope of the present invention all exhibit excellent breakage resistance and wear resistance and above all, Sample Nos. 2-5, 2-6 and 2-7, in which such a proportion that the ends of cracks, at the substrate side, in the coated film on the ridge of the cutting edge are terminated in the innermost titanium nitride layer and titanium carbonitride layer is at least 80 %, exhibits particularly excellent breakage resistance as well as wear resistance.

**Table 4**

| Sample No. | Breakage Resistance Test 1 Life (sec) | Wear Resistance Test 1 Average Flank Wear Width (mm) | Within Present Invention |
|---|---|---|---|
| 2-1 | 7 | 0.19 | |
| 2-2 | 9 | 0.20 | |
| 2-3 | 38 | 0.17 | ○ |
| 2-4 | 45 | 0.18 | ○ |
| 2-5 | 62 | 0.17 | ○ |
| 2-6 | 73 | 0.18 | ○ |
| 2-7 | 67 | 0.17 | ○ |

### (Example 3)

An insert of the same cemented carbide having a Form No. of ISO and a shape of CNMG 120408 as that of Example 1 was prepared. This insert was then coated with the following Coated Film Quality ④ in order from the lower layer:
Film Quality ④ : 1 µm TiN - 7 µm TiCN (aspect ratio 5 ~ 20) - 2µm TiC - 5 µm κ-alumina (total film thickness 15 µm)

The TiCN film was prepared by effecting the coating using acetonitrile, nitrogen gas, TiCl₄ and hydrogen gas as a starting gas or carrier gas, while varying the coating temperature within a range of 800 to 1000 °C during the coating and further varying the pressure in a furnace and gas composition to obtain an aspect ratio 5~ 20. In addition, the flank face of each sample of the resulting tools was masked and then was subjected to a blasting treatment with an iron powder from the rake face side while changing a projection speed of the iron powder to prepare various inserts differing in cracked state in the coated film, as shown in Table 5. Using these inserts, the same cutting test and Wear Resistance Test 2 as those of Example 1 were carreid out.

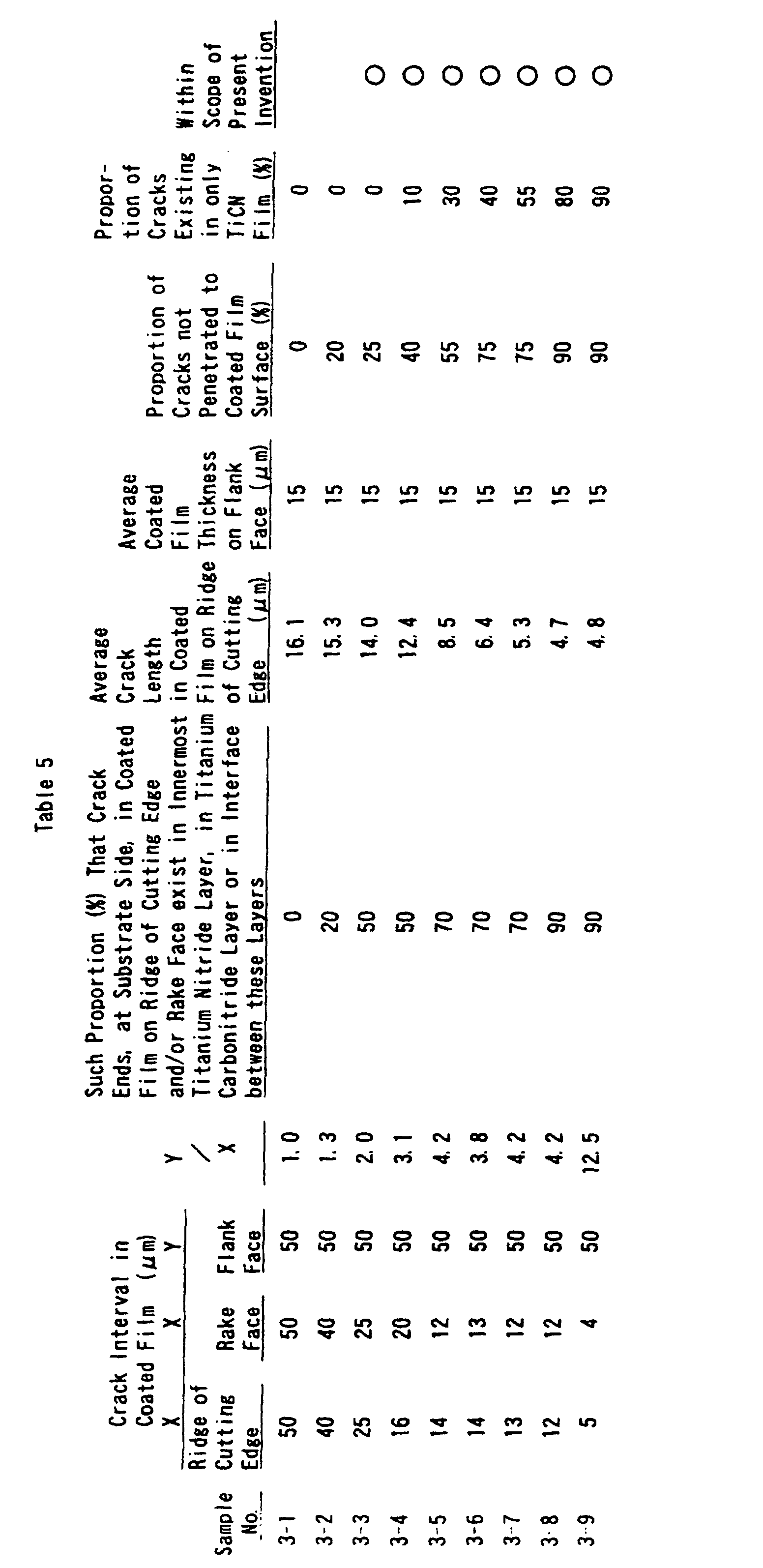

| Wear Resistance Test 2 | |
|---|---|
| Workpiece | Workpiece of FCD 700 with intermittent shape shown in Fig. 5 |
| Cutting Speed | 200 m/min |
| Feed | 0.3 mm/rev |
| Cutting Depth | 1.5 mm |
| Cutting Time | 10 minutes |
| Cutting Oil | wet process |
| Holder Used | PCLNR 2525-43 |

The results are shown in Table 6. As is evident from this table, the inserts of the present invention, Sample Nos. 3-3 to 3-9 show excellent breakage resistance and wear resistance, but above all, the inserts of Sample Nos. 3-5 to 3-9, in which, of the cracks in the coated film on the ridge of the cutting edge, those having the ends of the cracks, at the coated film surface side, not penetrated to the coated film surface, are in a proportion of at least 50 %, show particularly excellent wear resistance in Wear Resistance Test 1 as a high speed cutting test. Moreover, the inserts of Sample Nos. 3-7 to 3-9, in which, of the cracks in the coated film on the ridge of the cutting edge, those existing in only the titanium carbonitride layer of columnar structure and not penetrated to the upper and lower coated layers are in a proportion of at least 50 % show excellent performances in Breakage Resistance Test 1 and Wear Resistance Test 2 to give a tendency of film peeling by impacts in an intermittent cutting.

**Table 6**

| Sample No. | Breakage Resistance Test 1 Life (sec) | Wear Resistance Test 1 Average Flank Wear Width (mm) | Wear Resistance Test 2 Average Flank Wear Width (mm) | Within Present Invention |
|---|---|---|---|---|
| 3-1 | 2 | 0.27 | 0-22 | |
| 3-2 | 3 | 0.24 | 0.20 | |
| 3-3 | 21 | 0.23 | 0.21 | ○ |
| 3-4 | 25 | 0.21 | 0.19 | ○ |
| 3-5 | 29 | 0.15 | 0.18 | ○ |
| 3-6 | 32 | 0.16 | 0.17 | ○ |
| 3-7 | 59 | 0.15 | 0.12 | ○ |
| 3-8 | 65 | 0.13 | 0.10 | ○ |
| 3-9 | 73 | 0.13 | 0.09 | ○ |

### (Example 4)

A cemented carbide powder with a composition comprising, by weight, 86 % WC - 1 % TaC - 1 % NbC - 3 % TiC - 2 % ZrCN - 7 % Co was pressed, sintered in vacuum at 1400 °C for 1 hour and subjected to a surface grinding treatment and cutting edge treatment to prepare a cemented carbide insert with a Form No. ISO and a shape of CNMG 120408. When a cross section of this cemented carbide was mirror-polished and its microstructure was observed by an optical miscroscope, it was confirmed that there could be formed a β -free layer of about 25 µm in thickness on the alloy surface and an area with a higher hardness an inside the alloy directly below the β -free layer. This insert and the insert having no β -free layer on the alloy surface, prepared in Example 1, were coated with Film Quality ③ coated in Example 1.

Furthermore, the surface of this coated cemented carbide was subjected to a blasting treatment using an iron ball in an analogous manner to Example 1, while changing the size, projection speed, projection angle and projection time of the iron ball to prepare insert samples differing in cracked states in the coated films as shown in Table 7.

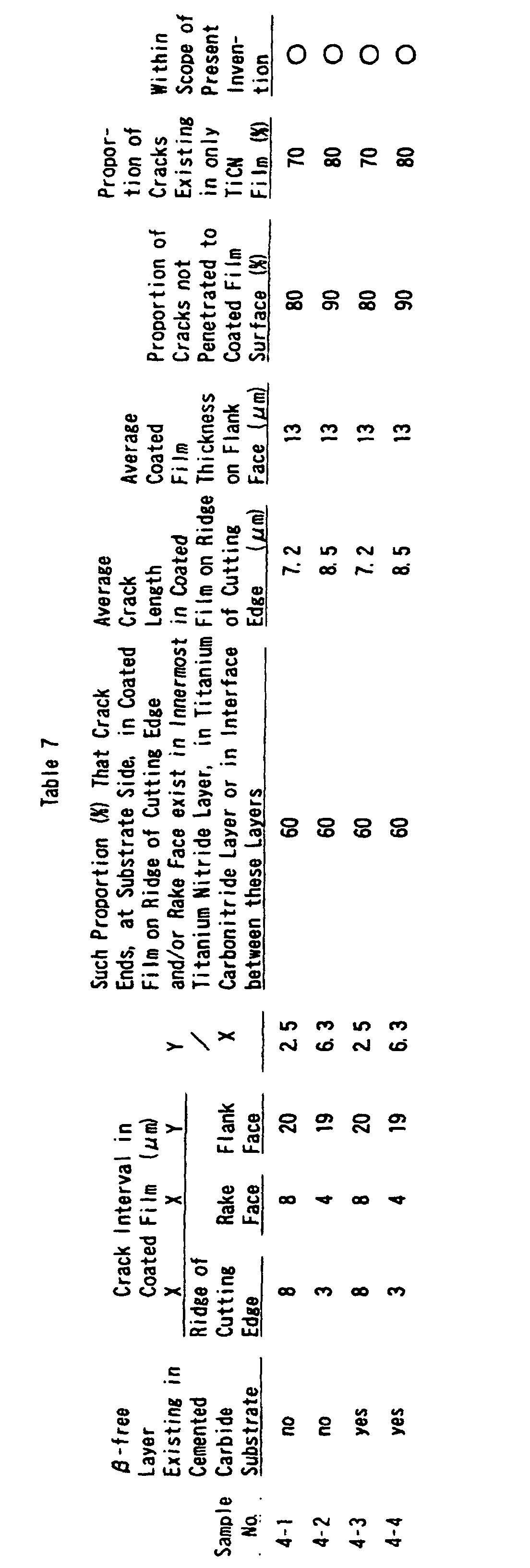

Using these inserts, Breakage Resistance Test 1 and Wear Resistance Test 1 were then carried out in an analogous manner to Example 1. The results are shown in Table 8. The inserts of the present invention, i.e. Sample Nos. 4-1 to 4-4 all exhibit excellent breakage resistance as well as wear resistance and above all, Sample Nos. 4-3 and 4-4 each having a β -free layer on the alloy surface show particularly excellent breakage resistance and wear resistance as compared with Sample Nos. 4-1 and 4-2 having β -free layer.

**Table 8**

| Sample No. | Breakage Resistance Test Life (sec) | Wear Resistance Test 1 Average Flank Wear Width (mm) | Within Present Invention |
|---|---|---|---|
| 4-1 | 72 | 0.17 | ○ |
| 4-2 | 79 | 0.17 | ○ |
| 4-3 | 113 | 0.12 | ○ |
| 4-4 | 125 | 0.12 | ○ |

### (Example 5)

The following Film Quality ⑤ was coated onto a surface of the cemented carbide prepared in Example 4. Further, the surface of this coated cemented carbide was polished by the use of a # 400 diamond adhered brush from the rake face side while changing the brush revolving speed, brush cutting depth and quantity of a grinding oil, etc. to prepare inserts differing in cracked state in the coated film, as shown in Table 9. Using these inserts, then, the same breakage resistance test as that of Example 1 was carried out and a workpiece SCM 415 was subjected to Wear Resistance Tests 3 and 4 under the following cutting conditions, as shown in Table 10.
Film Quality ⑤ : 0.3 µm TiN - 0.4 µm TiBN - 6 µm α-Al₂O₃ - - 0.3 µm TiCNO - 10 µm TiCN (aspect ratio 10) - 0.5 µm AlON - 1.5µm κ-Al₂O₃ (total film thickness 19 µm)

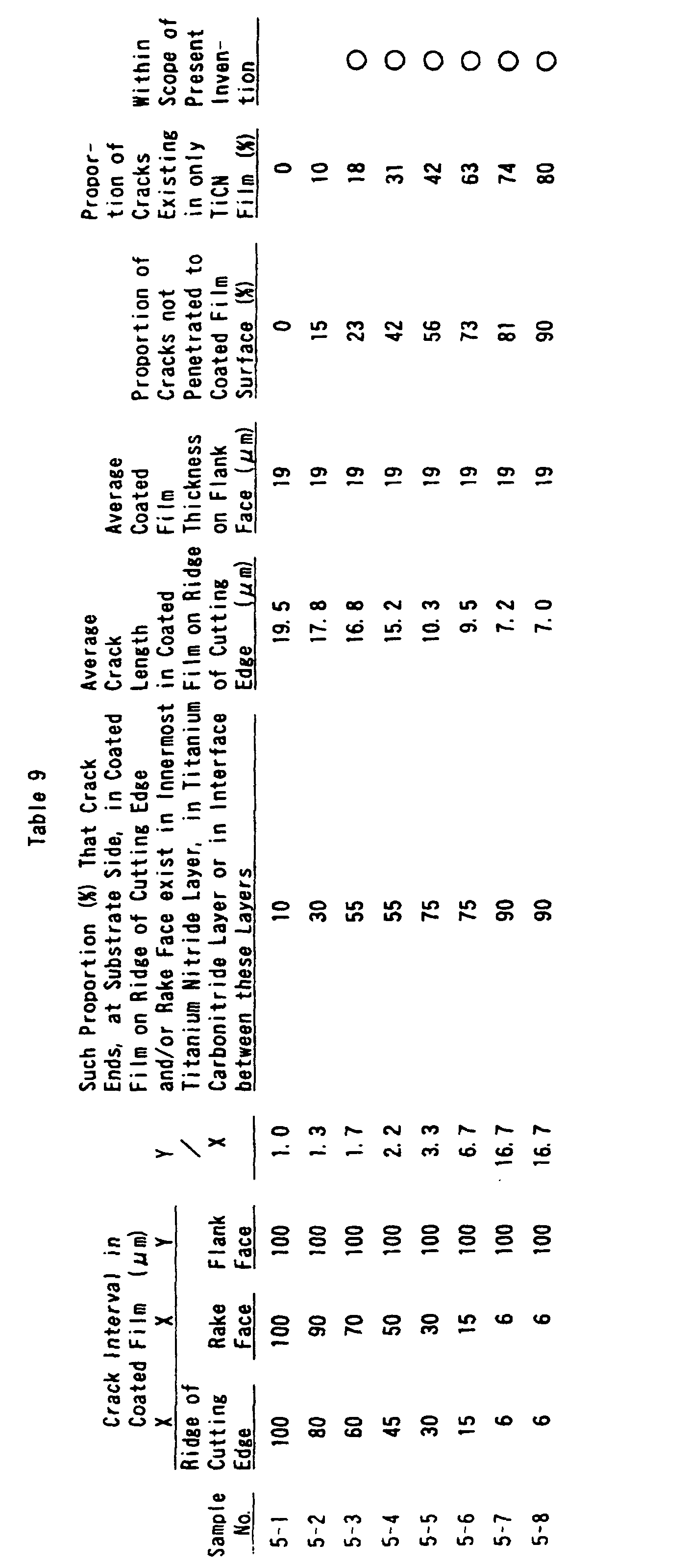

**Table 10**

| | Wear Resistance Test 3 (high speed cutting) | Wear Resistance Test 4 (low speed cutting) |
|---|---|---|
| Cutting Speed | 500 m/min | 150 m/min |
| Feed | 0.3 mm/rev | 0.3 mm/rev |
| Cutting Depth | 1.5 mm | 1.5 mm |
| Cutting Time | 10 minutes | 60 minutes |
| Cutting Oil | dry process | wet process |
| Holder Used | PCLNR 2525-43 | PCLNR 2525-43 |

The results are shown in Table 11. It will be understood from the results of Table 11 that Sample Nos. 5-3 to 5-8 according to the present invention exhibit more excellent wear resistance and breakage resistance as compared with Sample Nos. 5-1 and 5-2.

Above all, Sample Nos. 5-6, 5-7 and 5-8, in which a proportion of cracks existing in only the TiCN film exceeds 50 %, exhibited particularly excellent performances in high speed cutting.

**Table 11**

| Sample No. | Breakage Resistance Test Life (sec) | Wear Resistance Test 3 Average Flank Wear Width (mm) | Wear Resistance Test 4 Average Flank Wear Width (mm) | Within Present Invention |
|---|---|---|---|---|
| 5-1 | 2 | 0.35 | 0.22 | |
| 5-2 | 5 | 0.34 | 0.22 | |
| 5-3 | 29 | 0.29 | 0.21 | ○ |
| 5-4 | 33 | 0.27 | 0.15 | ○ |
| 5-5 | 36 | 0.24 | 0.14 | ○ |
| 5-6 | 38 | 0.18 | 0.12 | ○ |
| 5-7 | 51 | 0.15 | 0.13 | ○ |
| 5-8 | 56 | 0.14 | 0.12 | ○ |

### (Example 6)

A cemented carbide powder with a composition comprising, by weight, 87 % WC - 4 % TiC - 2 % ZrC - 7 % Co was pressed, sintered in vacuum at 1400°C for 1 hour and subjected to a surface grinding treatment and cutting edge treatment to prepare a cemented carbide insert with a Form No. ISO and a shape of CNMG 120408. This insert was coated with the following three kinds of coated films, respetively, in order from the lower layer by a CVD method:
Film Quality ⑥ : 0.3 µm TiC - 8 µm TiCN (aspect ratio 3) - 0.5 µm TiCNO - 1.7 µm κ-alumina - 0. 5 µm TiN (total film thickness 11 µm)
Film Quality ⑦ : 0.3 µm TiN - 8 µm TiCN (aspect ratio 3) - 0.5 µm TiCNO - 1.7 µm κ-alumina - 0.5 µm TiN (total film thickness 11 µm)
Film Quality ⑧ : 0.3 µm TiN - 8 µm TiCN (aspect ratio 7) - 0.5 µm TiCNO - 1.7 µm κ-alumina - 0.5 µm TiN (total film thickness 11 µm)

When coating a TiCN layer of Film Quality ⑧, acetonitrile was used as an organo CN compound and coated at 900 °C to form a TiCN layer of columnar structure with an aspect ratio of about 7. Any film quality was formed using H₂S gas as an additive gas when coating an alumina film in such a manner that the film thickness be uniform on the ridge of the cutting edge and central part of the flank face. In any film quality, accordingly, the coated film thickness was about 10 µm throughout the rake face, ridge of the cutting edge and central part of the flank face.

Furthermore, the surface of this coated cemented carbide was subjected to a blasting treatment while changing the size and projection speed of the iron ball to prepare insert samples differing in cracked states in the coated films as shown in Table 12. The state of cracks in the coated film was quantified by cutting each sample of the coated cemented carbides by a diamond wheel, burying in a resin in such a manner that the cut surface was well seen, subjecting the cut surface to surface grinding of a thickness of about 300 µm, using Diamond Wheel # 140 as a grinding disk under conditions of a grinding speed of 30 m/sec, feed speed of 20 cm/sec, cutting depth of 4 µm (initial stage), 2 µm (middle stage) and 1 µm (latter stage), further to rough polishing by a polishing disk with Diamond Paste # 1500 and then to finish-polishing with Diamond Paste # 3000 and observing the finish-polished surface using an optical microscope with a magnification of 1500 times.

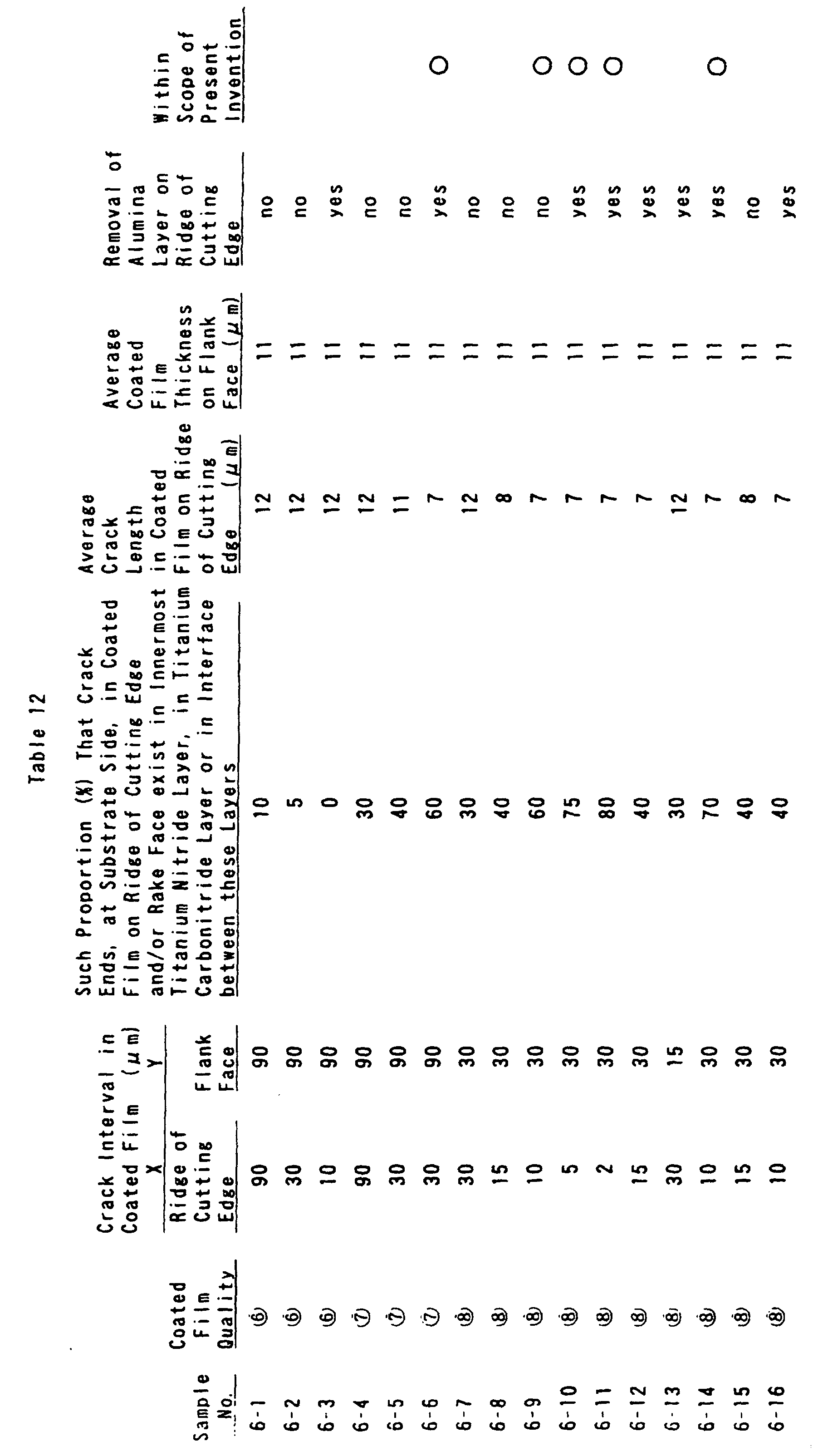

Using these inserts, a workpiece of SCM 435, shown in Fig. 5 (round rod provided with four grooves for intermittent cutting), was subjected to cutting under the following conditions to estimate the breakage resistance of each tool sample and Wear Resistance Test 5 was carried out as to a workpiece SCM 435 under the following conditions:

| Breakage Resistance Test 2 | |
|---|---|
| Cutting Speed | 100 m/min |
| Feed | 0.3 mm/rev |
| Cutting Depth | 2 mm |
| Cutting Oil | dry process |
| Holder Used | PCLNR 2525-43 |

Judgment of the service life was effected at the time when fracture took place and the life time was measured by four corner average.

| Wear Resistance Test 5 | |
|---|---|
| Cutting Speed | 260 m/min |
| Feed | 0.35 mm/rev |
| Cutting Depth | 1.5 mm |
| Cutting Time | 30 minutes |
| Cutting Oil | wet process |
| Holder Used | PCLNR 2525-43 |

The results are shown in Table 13, from which it is apparent that the inserts of the present invention, Sample Nos. 6-6, 6-10, 6-11 and 6-14, in which Film Qualities ⑦ and ⑧ comprising the lowermost layer consisting of 0.3 µm TiN and, as a layer above it, 8 µm TiCN layer of columnar structure with an aspect ratio of 3 to 7 [capable of satisfying Construction Element (a) of the foregoing Invention (14)] are coated and Construction Elements (b), (c), (d) and (e) of the foregoing Invention (14) are satisfied, exhibit more excellent breakage resistance and wear resistance, as compared with Sample Nos. 6-1 to 6-3 whose lowermost layer does not consist of TiN and Sample Nos. 6-4, 6-5, 6-7, 6-8, 6-9, 6-12, 6-13, 6-15 and 6-16, which consist of Film Qualities ⑦ and ⑧, but do not satisfy any one of Construction Elements (b), (c), (d) and (e).

Above all, Sample Nos. 6-10, 6-11 and 6-14, in which the average crack interval in the coated film on the ridge of the cutting edge is at most 10 µm, in particular, exhibit more excellent breakage resistance and wear resistance.

Furthermore, Sample Nos. 6-10 and 6-11 each having a value of Y/X of at least 5 (average crack interval X in coated film on ridge of the cutting edge and average crack interval Y in coated film on flank face) exhibit particularly excellent breakage resistance and wear resistance.

**Table 13**

| Sample No. | Construction Elements Satisfied | | | | | Y/X | Breakage Resistance Test 2 Life (sec) | Wear Resistance Test 5 Average Flank Wear Width (mm) | Within Scope of Our Invention |
|---|---|---|---|---|---|---|---|---|---|
| | (a) | (b) | (c) | (d) | (e) | | | | |
| 6-1 | × | × | × | × | × | 1 | 2 | 0.41 | |
| 6-2 | × | **○** | × | × | × | 3 | 3 | 0.45 | |
| 6-3 | × | **○** | × | × | ○ | 9 | 10 | 0.36 | |
| 6-4 | ○ | × | × | × | × | 1 | 3 | 0.34 | |
| 6-5 | ○ | ○ | × | × | × | 3 | 17 | 0.38 | |
| 6-6 | ○ | ○ | ○ | ○ | ○ | 3 | 75 | 0.27 | ○ |
| 6-7 | ○ | × | × | × | × | 1 | 8 | 0.29 | |
| 6-8 | ○ | ○ | × | ○ | × | 2 | 25 | 0.28 | |
| 6-9 | ○ | ○ | ○ | ○ | × | 3 | 34 | 0.23 | |
| 6-10 | ○ | ○ | ○ | ○ | ○ | 6 | 105 | 0.19 | ○ |
| 6-11 | ○ | ○ | ○ | ○ | ○ | 15 | 121 | 0.18 | ○ |
| 6-12 | ○ | ○ | × | ○ | ○ | 2 | 38 | 0.28 | |
| 6-13 | ○ | × | × | × | ○ | 0.5 | 12 | 0.37 | |
| 6-14 | ○ | ○ | ○ | ○ | ○ | 3 | 96 | 0.21 | ○ |
| 6-15 | ○ | ○ | × | ○ | × | 2 | 23 | 0.30 | |
| 6-16 | ○ | ○ | × | ○ | ○ | 3 | 29 | 0.27 | |

### (Example 7)

An insert of the same cemented carbide having a Form No. ISO and a shape of CNMG 120408 as that of Example 6 was prepared. This insert was coated with Coated Film Quality ⑧ described in Example 6 and subjected to a surface treatment of the surface of the coated cemented carbide using a nylon brush, in which # 800 diamond abrasives was buried, from the rake face side in such a manner as removing the alumina layer on at least a part of the ridge of the cutting edge to prepare various inserts differing in cracked state in the coated film, as shown in Table 14. Using these inserts, the same cutting test as in Example 6 was carreid out.

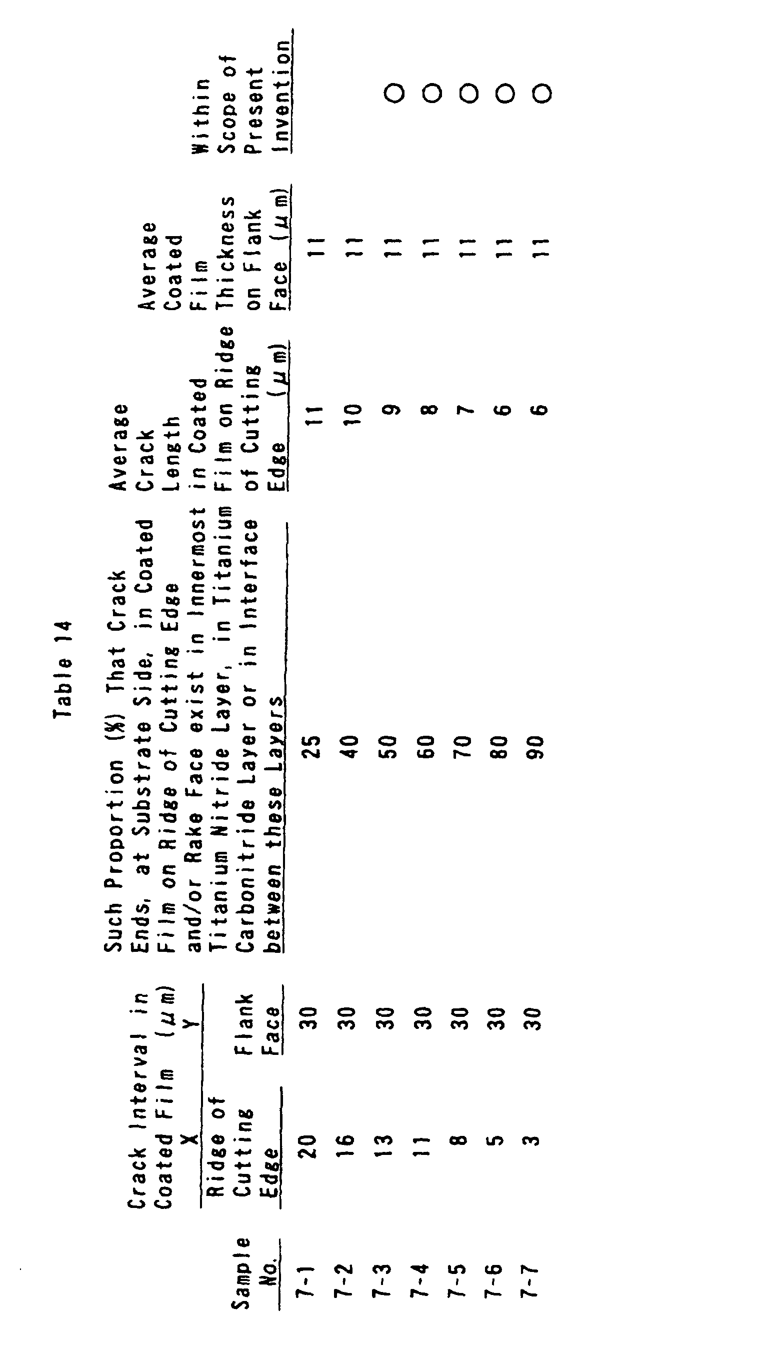

The results are shown in Table 15. The inserts of Sample Nos. 7-3 to 7-7 within the scope of the present invention all exhibit excellent breakage resistance and wear resistance and above all, Sample Nos. 7-6 and 7-7, in which such a proportion that the ends of cracks, at the substrate side, in the coated film on the ridge of the cutting edge are terminated in the innermost titanium nitride layer, in the titanium carbonitride layer or in an interface between the both is at least 80 %, exhibit particularly excellent breakage resistance as well as wear resistance.

**Table 15**

| Sample No. | Breakage Resistance Test 2 Life (sec) | Wear Resistance Test 5 Average Flank Wear Width (mm) | Within Present Invention |
|---|---|---|---|
| 7-1 | 12 | 0.24 | |
| 7-2 | 19 | 0.24 | |
| 7-3 | 68 | 0.21 | ○ |
| 7-4 | 74 | 0.20 | ○ |
| 7-5 | 82 | 0.19 | ○ |
| 7-6 | 107 | 0.19 | ○ |
| 7-7 | 119 | 0.18 | ○ |

### (Example 8)

An insert of the same cemented carbide having a Form No. of ISO and a shape of CNMG 120408 as that of Example 6 was prepared. This insert was then coated with the following Coated Film Quality ⑨ in order from the lower layer:
Film Quality ⑨ 1 µm TiN - 7 µm TiCN - 3 µm TiC - 2 µm α-alumina

The TiCN layer was prepared by effecting the coating using acetonitrile, nitrogen gas, TiCl₄ and hydrogen gas as a starting gas or carrier gas, while varying the coating temperature within a range of 800 to 1000 °C during the coating and further varying the pressure in a furnace and gas composition to obtain an aspect ratio of 5 ~ 20. In addition, the surface of each sample of the resulting inserts was subjected to a surface treatment from the rake face with an elastic grindwheel, in which SiC abrasive grains of # 1200 were buried, to prepare various inserts differing in cracked state in the coated film, as shown in Table 16. Using these inserts, the same cutting test and Wear Resistance Test 6 as in Example 6 were carreid out.

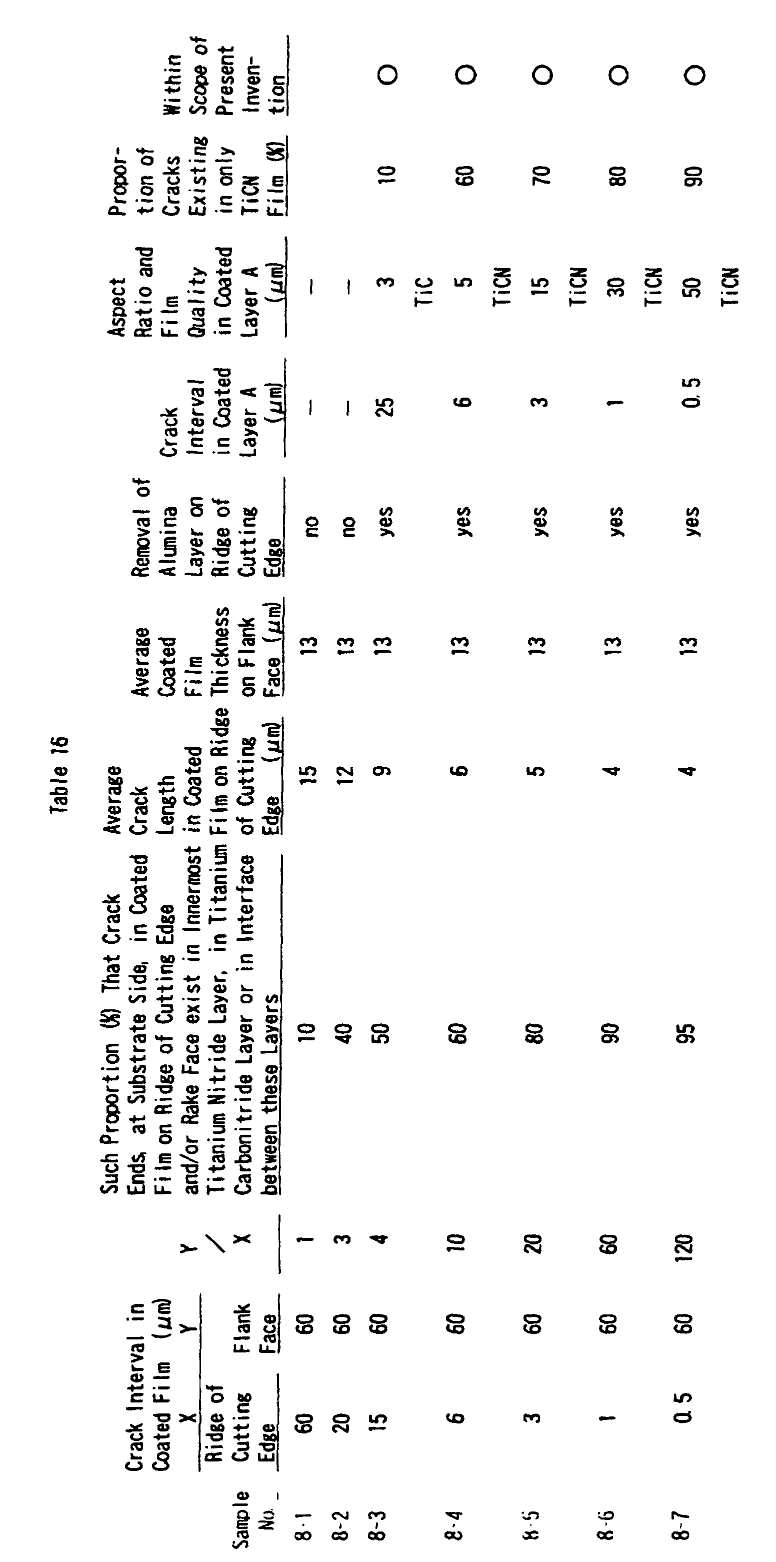

| Wear Resistance Test 6 | |
|---|---|
| Workpiece | Workpiece of FCD 700 with intermittent shape shown in Fig. 5 |
| Cutting Speed | 150 m/min |
| Feed | 0.35 mm/rev |
| Cutting Depth | 1.5 mm |
| Cutting Time | 10 minutes |
| Cutting Oil | wet process |
| Holder Used | PCLNR 2525-43 |

The results are shown in Table 17. As is evident from this table, the inserts of the present invention, Sample Nos. 8-3 to 8-7 all show excellent breakage resistance and wear resistance, but above all, the inserts of Sample Nos. 8-4 to 8-7, in which the surface-exposed coated layer A in an area where the said alumina layer has been removed consists of titanium carbonitride layer of columnar structure with an aspect ratio of at least 5, having a thickness of 3 to 30 µm, show more excellent performances in Breakage Resistance Test 2 and Wear Resistance Test 6 to give a tendency of film peeling by impacts in an intermittent cutting. The inserts of Sample Nos. 8-5 to 8-7, in which the crack intervals in the coated layer A are in a range of 0.5 to 5 µm, show particularly excellent breakage resistance and wear resistance

**Table 17**

| Sample No. | Breakage Resistance Test 2 Life (sec) | Wear Resistance Test 5 Average Flank Wear Width (mm) | Wear Resistance Test 6 Average Flank Wear Width (mm) | Within Present Invention |
|---|---|---|---|---|
| 8-1 | 2 | 0.29 | 0.24 | |
| 8-2 | 15 | 0.25 | 0.21 | |
| 8-3 | 63 | 0.20 | 0.18 | ○ |
| 8-4 | 97 | 0.18 | 0.10 | ○ |
| 8-5 | 146 | 0.17 | 0.08 | ○ |
| 8-6 | 159 | 0.19 | 0.08 | ○ |
| 8-7 | 132 | 0.23 | 0.09 | ○ |

### (Example 9)

A cemented carbide powder with a composition comprising, by weight, 87 % WC - 4 % TiC - 2 % ZrCN - 7 % Co was pressed, sintered in vacuum at 1400 °C for 1 hour and subjected to a surface grinding treatment and cutting edge treatment to prepare a cemented carbide insert with a Form No. ISO and a shape of CNMG 120408. When a cross section of this cemented carbide was mirror-polished and its microstructure was observed by an optical miscroscope, it was confirmed that there could be formed a β -free layer of about 25 µm on the alloy surface and an area with a higher hardness than inside the alloy directly below the β -free layer by measurement of a cross-sectional hardness distribution. This insert and the insert having no β -free layer on the alloy surface, prepared in Example 6, were coated with the coated film, coated in Example 8.

Furthermore, the surface of this coated cemented carbide was subjected to a blasting treatment using an iron ball in an analogous manner to Example 6, while changing the size, projection speed, projection angle and projection time of the iron ball to prepare insert samples differing in cracked states in the coated films as shown in Table 18.

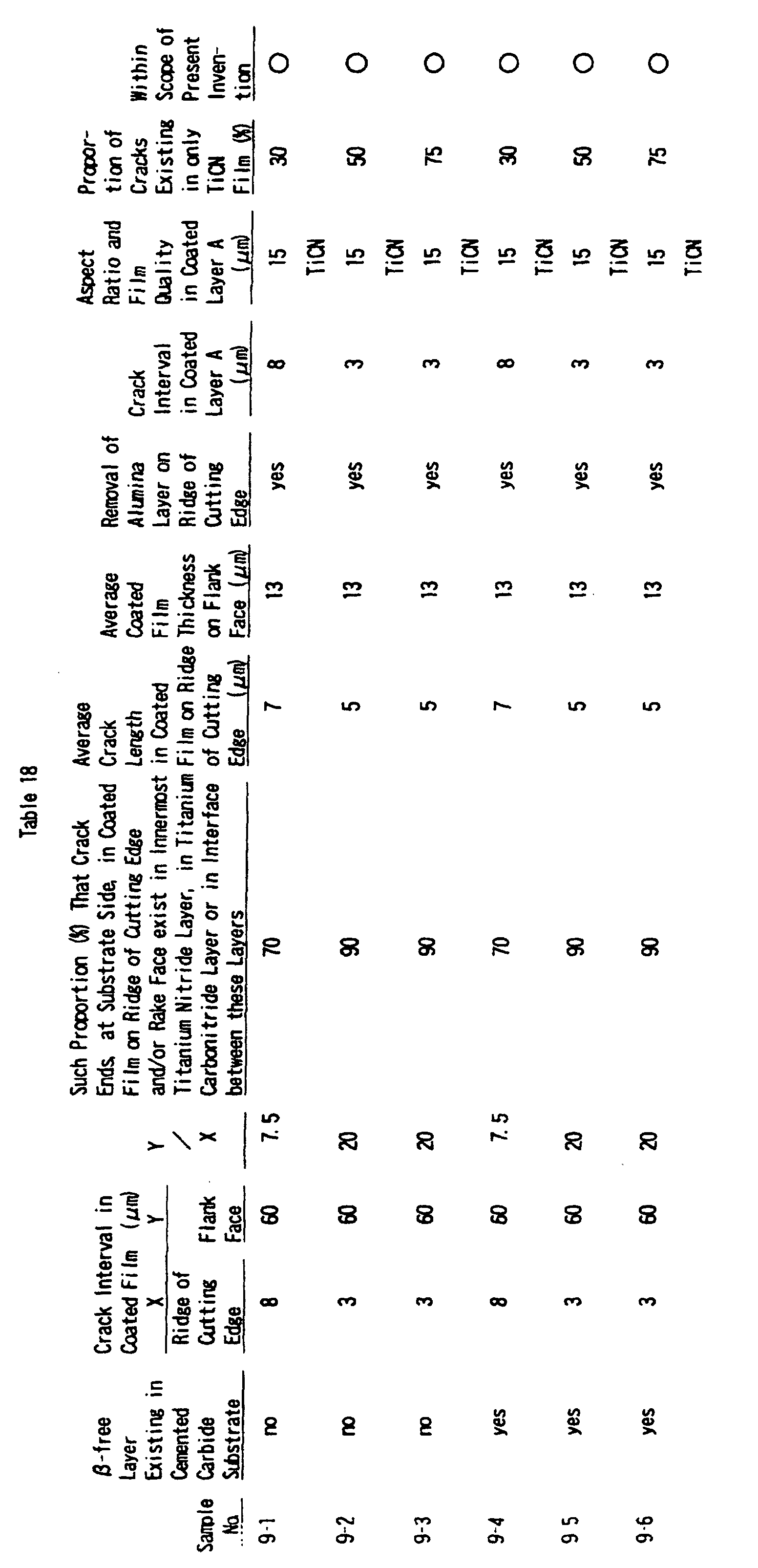

Using these inserts, Breakage Resistance Test 2 and Wear Resistance Tests 5 and 6 were then carried out in an analogous manner to Example 6 and 8. The results are shown in Table 19. The inserts of the present invention, Sample Nos. 9-1 to 9-6 all exhibit excellent breakage resistance as well as wear resistance and above all, Sample Nos. 9-4 and 9-6 each having a β-free layer on the alloy surface show more excellent breakage resistance and wear resistance as compared with Sample Nos. 9-1 to 9-3 having no β-free layer. It is confirmed that above all, the inserts of Sample Nos. 9-5 and 9-6 in which the proportion of cracks existing in only the TiCN layer of columnar structure is at least 50 % have particularly excellent breakage resistance and wear resistance.

**Table 19**

| Sample No. | Breakage Resistance Test 2 Life (sec) | Wear Resistance Test 5 Average Flank Wear Width (mm) | Wear Resistance Test 6 Average Flank Wear Width (mm) | Within Present Invention |
|---|---|---|---|---|
| 9-1 | 110 | 0.21 | 0.11 | ○ |
| 9-2 | 148 | 0.18 | 0.07 | ○ |
| 9-3 | 162 | 0.17 | 0.06 | ○ |
| 9-4 | 156 | 0.15 | 0.11 | ○ |
| 9-5 | 213 | 0.13 | 0.08 | ○ |
| 9-6 | 237 | 0.12 | 0.06 | ○ |

### (Example 10)

A cemented carbide powder with a composition comprising, by weight, 90 % WC - 3 % TiC - 1 % ZrC - 6 % Co was pressed, sintered in vacuum at 1400°C for 1 hour and subjected to a surface-grinding treatment and cutting edge treatment to prepare a cemented carbide insert with a Form No. ISO and a shape of CNMG 120408. This insert was coated with the following three kinds of coated films, respetively, in order from the lower layer by a CVD method:
Film Quality 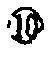 0.3µm TiC - 5.7 µm TiCN (aspect ratio 3) - 0.5 µm TiCNO - 4 µm α-alumina - 0.5 µm TiN (total film thickness 11µm)
Film Quality 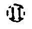 0.3µm TiN - 5.7 µm TiCN (aspect ratio 3) - 0.5 µm TiCNO - 4 µm α-alumina - 0.5 µm TiN (total film thickness 11µm)
Film Quality 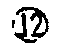 0.3µm TiN - 5.7 µm TiCN (aspect ratio 7) - 0.5 µm TiCNO - 4 µm α-alumina - 0.5 µm TiN (total film thickness 11 µm)

When coating a TiCN layer of Film Quality 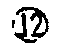 , acetonitrile was used as an organo CN compound and coated at 900 °C to form a TiCN layer of columnar structure with an aspect ratio of about 7. Any film quality was formed using H₂S gas as an additive gas when coating an alumina film in such a manner that the film thickness be uniform on the ridge of the cutting edge and central part of the flank face. In any film quality, accordingly, the coated film thickness was about 11 µm throughout the rake face, ridge of the cutting edge and central part of the flank face.

Furthermore, the surface of this coated cemented carbide was subjected to a blasting treatment while changing the size and projection speed to prepare insert samples differing in cracked states in the coated films as shown in Table 20. The state of cracks in the coated film was quantified by cutting each sample of the coated cemented carbides by a diamond wheel, burying in a resin in such a manner that the cut surface was well seen, subjecting the cut surface to surface grinding of a thickness of about 300 µm, using Diamond Wheel # 140 as a grinding disk under conditions of a grinding speed of 30 m/sec, feed speed of 20 cm/sec, cutting depth of 4 µm (initial stage), 2 µm (middle stage) and 1 µm (latter stage), further to rough polishing by a polishing disk with Diamond Paste # 1500 and then to finish-polishing with Diamond Paste # 3000 and observing the finish-polished surface using an optical microscope with a magnification of 1500 times. Presence or absence of the polishing of the Al₂O₃ layer is judged by observing the coated film on the ridge of the cutting edge and central part of the flank face by SEM and regarding as the presence of "polishing" when the grain diameter or grain boundary of alumina on the ridge of the cutting edge is hard to be discriminated.

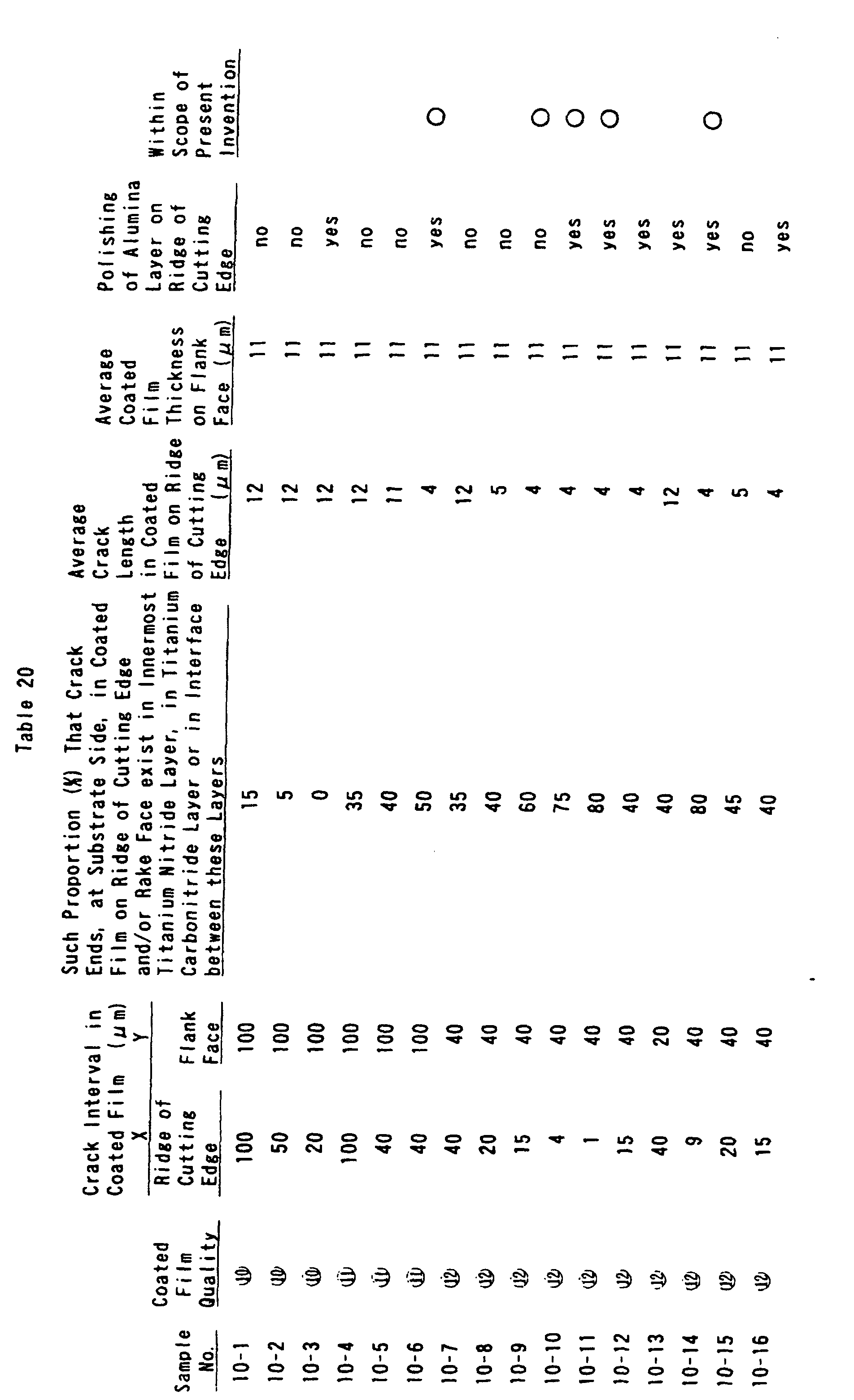

Using these inserts, a workpiece of SCM 435, shown in Fig. 5 (round rod provided with four grooves for intermittent cutting), was subjected to cutting under the following conditions to estimate the breakage resistance of each tool sample and Wear Resistance Test 7 was carried out as to a workpiece SCM 435 under the following conditions:

| Breakage Resistance Test 3 | |
|---|---|
| Cutting Speed | 150 m/min |
| Feed | 0.3 mm/rev |
| Cutting Depth | 2 mm |
| Cutting Oil | dry process |
| Holder Used | PCLNR 2525-43 |

Judgment of the service life was effected at the time when fracture took place and the life time was measured by four corner average.

| Wear Resistance Test 7 | |
|---|---|
| Cutting Speed | 250 m/min |
| Feed | 0.3 mm/rev |
| Cutting Depth | 1.5 mm |
| Cutting Time | 30 minutes |
| Cutting Oil | wet process |
| Holder Used | PCLNR 2525-43 |

The results are shown in Table 21, from which it is apparent that the inserts of the present invention, Sample Nos. 10-6, 10-10, 10-11 and 10-14, in which Film Qualities 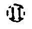 and 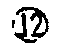 comprising the lowermost layer consisting of 0.3 µm TiN and, as a layer above it, 5 µm TiCN layer of a columnar structure with an aspect ratio of 3 to 7 [capable of satisfying Construction Element (a) of the foregoing Invention (14)] are coated and Construction Elements (b), (c), (d) and (e) of the foregoing Invention (14) are satisfied, exhibit more excellent breakage resistance and wear resistance, as compared with Sample Nos. 10-1 to 10-3, whose lowermost layer does not consist of TiN, and Sample Nos. 10-4, 10-5, 10-7, 10-8, 10-9, 10-12, 10-13, 10-15 and 10-16, which consist of Film Qualities 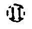 and 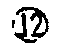 , but do not satisfy any one of Construction Elements (b), (c), (d) and (e).

Above all, Sample Nos. 10-10, 10-11 and 10-14, in which the average crack interval in the coated film on the ridge of the cutting edge is at most 10 µm, in particular, exhibit more excellent breakage resistance and wear resistance.

Furthermore, Sample Nos. 10-10 and 10-11 having a value of Y/X of at least 5 (average crack interval X in coated film on ridge of the cutting edge and average crack interval Y in coated film on flank face) exhibit prticularly excellent breakage resistance and wear resistance.

**Table 21**

| Sample No. | Construction Elements Satisfied | | | | | Y/X | Breakage Resistance Test 3 Life (sec) | Wear Resistance Test 7 Average Flank Wear Width (mm) | Within Scope of Our Invention |
|---|---|---|---|---|---|---|---|---|---|
| | (a) | (b) | (c) | (d) | (e) | | | | |
| 10-1 | × | × | × | × | × | 1 | 3 | 0.38 | |
| 10-2 | × | ○ | × | × | × | 2 | 4 | 0.41 | |
| 10-3 | × | ○ | × | × | ○ | 5 | 11 | 0.34 | |
| 10-4 | ○ | × | × | × | × | 1 | 5 | 0.32 | |
| 10-5 | ○ | ○ | × | × | × | 2.5 | 21 | 0.36 | |
| 10-6 | ○ | ○ | ○ | ○ | ○ | 2.5 | 78 | 0.25 | ○ |
| 10-7 | ○ | × | × | × | × | 1 | 9 | 0.29 | |
| 10-8 | ○ | ○ | × | ○ | × | 2 | 30 | 0.26 | |
| 10-9 | ○ | ○ | ○ | ○ | × | 2.7 | 37 | 0.22 | |
| 10-10 | ○ | ○ | ○ | ○ | ○ | 10 | 110 | 0.18 | ○ |
| 10-11 | ○ | ○ | ○ | ○ | ○ | 40 | 132 | 0.17 | ○ |
| 10-12 | ○ | ○ | × | ○ | ○ | 2.7 | 39 | 0.28 | |
| 10-13 | ○ | × | × | × | ○ | 0.5 | 14 | 0.35 | |
| 10-14 | ○ | ○ | ○ | ○ | ○ | 4.4 | 103 | 0.19 | ○ |
| 10-15 | ○ | ○ | × | ○ | × | 2 | 25 | 0.28 | |
| 10-16 | ○ | ○ | × | ○ | ○ | 2.7 | 31 | 0.26 | |

### (Example 11)

An insert of the same cemented carbide having a Form No. ISO and a shape of CNMG 120408 as that of Example 10 was prepared. This insert was coated with Coated Film Quality 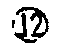 described in Example 10 and subjected to a surface treatment of the surface of the coated cemented carbide using a nylon brush, in which # 800 diamond abrasives was buried, from the rake face side in such a manner as polishing the alumina layer, while changing the rotating speed of the brush, brush cutting depth, quantity of a grinding oil, etc. to prepare various inserts differing in cracked state in the coated film, as shown in Table 22. Using these inserts, the same cutting test as in Example 10 was carreid out.

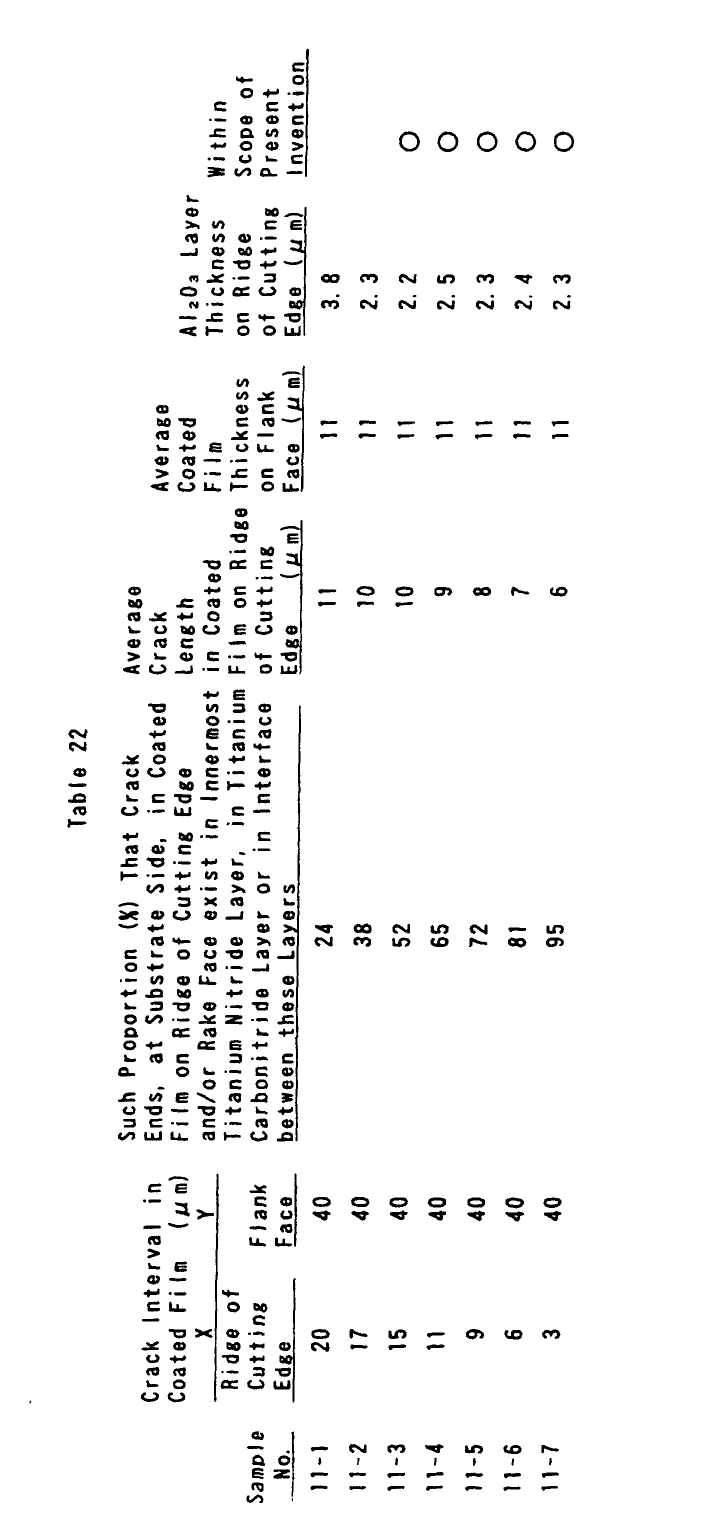

The results are shown in Table 23. The inserts of Sample Nos. 11-3 to 11-7 within the scope of the present invention all exhibit excellent breakage resistance and wear resistance and above all, Sample Nos. 11-6 and 11-7, in which such a proportion that the ends of cracks, at the substrate side, in the coated film on the ridge of the cutting edge are terminated in the innermost titanium nitride layer, in the titanium carbonitride layer or in an interface between the both is at least 80 %, exhibit particularly excellent breakage resistance as well as wear resistance.

**Table 23**

| Sample No. | Breakage Resistance Test 3 Life (sec) | Wear Resistance Test 7 Average Flank Wear Width (mm) | Within Present Invention |
|---|---|---|---|
| 11-1 | 15 | 0.22 | |
| 11-2 | 20 | 0.23 | |
| 11-3 | 75 | 0.19 | ○ |
| 11-4 | 80 | 0.18 | ○ |
| 11-5 | 91 | 0.18 | ○ |
| 11-6 | 123 | 0.17 | ○ |
| 11-7 | 131 | 0.17 | ○ |

### (Example 12)

An insert of the same cemented carbide having a Form No. of ISO and a shape of CNMG 120408 as that of Example 10 was prepared. This insert was then coated with the following Coated Film Quality 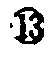 in order from the lower layer: Film Quality 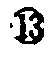 1 µm TiN - 4.5 µm TiCN - 0.5 µm TiC - 7 µm κ-alumina

The TiCN layer was prepared by effecting the coating using acetonitrile, nitrogen gas, TiCl₄ and hydrogen gas as a starting gas or carrier gas, while varying the coating temperature within a range of 800 to 1000 °C during the coating and further varying the pressure in a furnace and gas composition to obtain an aspect ratio of 5 ~ 20. In addition, the surface of each sample of the resulting inserts was subjected to a surface treatment from the rake face with an elastic grindwheel, in which SiC abrasive grains of # 1200 were buried, to prepare various inserts differing in cracked state in the coated film, as shown in Table 24. Using these inserts, the same cutting test and Wear Resistance Test 8 as in Example 10 were carreid out.

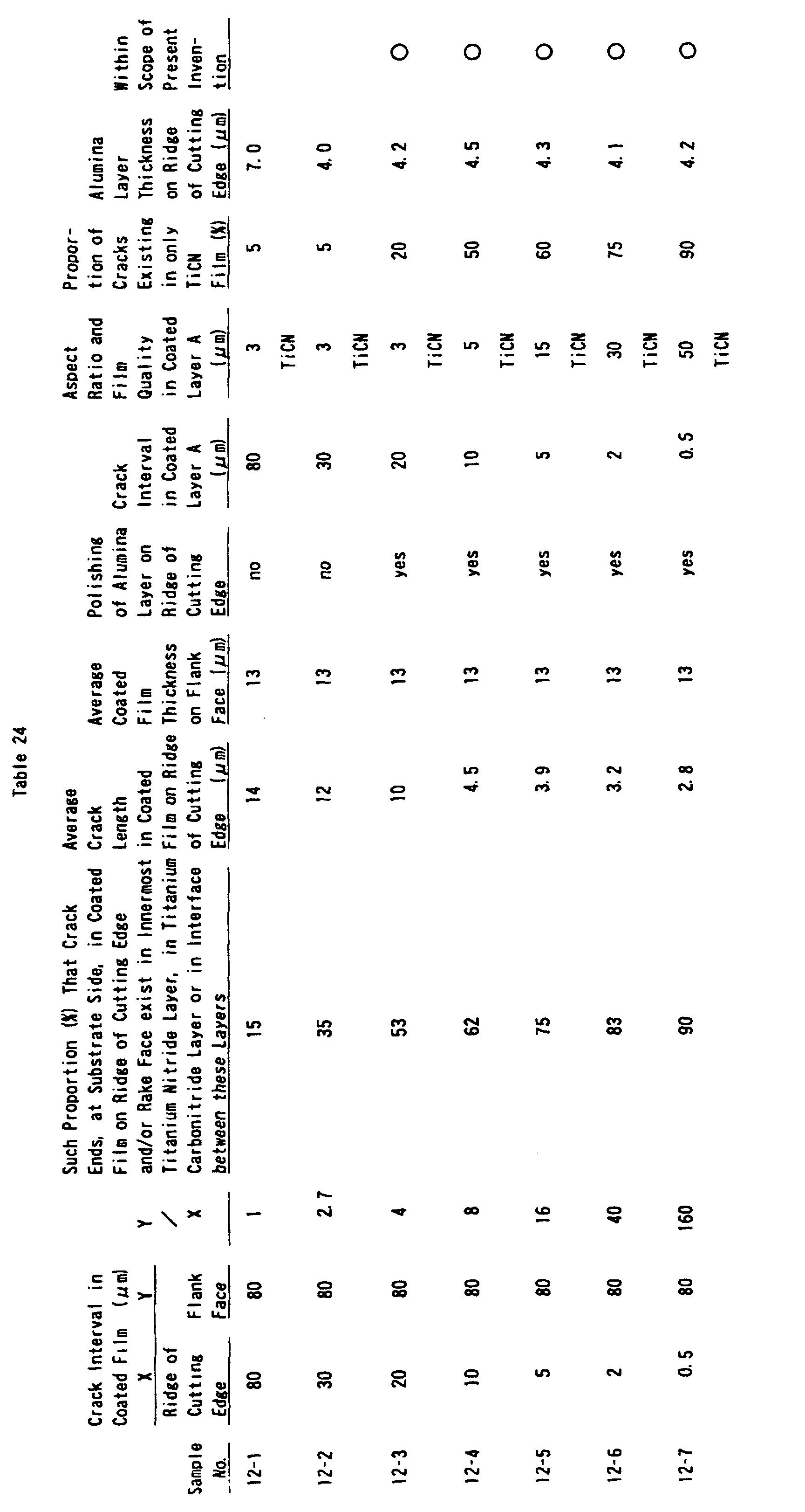

| Wear Resistance Test 8 | |
|---|---|
| Workpiece | Workpiece of FCD 700 with intermittent shape shown in Fig. 5 |
| Cutting Speed | 180 m/min |
| Feed | 0.3 mm/rev |
| Cutting Depth | 1.5 mm |
| Cutting Time | 10 minutes |
| Cutting Oil | wet process |
| Holder Used | PCLNR 2525-43 |

The results are shown in Table 25. As is evident from this table, the inserts of the present invention, Sample Nos. 12-3 to 12-7 all show excellent breakage resistance and wear resistance, but above all, the inserts of Sample Nos. 12-4 to 12-7, in which the lower layer A of an area where tne said alumina layer has been polished consists of titanium carbonitride layer of columnar structure with an aspect ratio of at least 5, having a thickness of 3 to 30 µm, show more excellent performances in Breakage Resistance Test 3 and Wear Resistance Test 8 to give a tendency of film peeling by impacts in an intermittent cutting. The inserts of Sample Nos. 12-5 to 12-7, in which the crack intervals in the coated layer A are in a range of 0.5 to 5 µm, show particularly excellent breakage resistance and wear resistance.

**Table 25**

| Sample No. | Breakage Resistance Test 3 Life (sec) | Wear Resistance Test 7 Average Flank Wear Width (mm) | Wear Resistance Test 8 Average Flank Wear Width (mm) | Within Present Invention |
|---|---|---|---|---|
| 12-1 | 5 | 0.27 | 0.22 | |
| 12-2 | 21 | 0.24 | 0.19 | |
| 12-3 | 70 | 0.17 | 0.16 | ○ |
| 12-4 | 105 | 0.16 | 0.09 | ○ |
| 12-5 | 162 | 0.15 | 0.07 | ○ |
| 12-6 | 173 | 0.17 | 0.08 | ○ |
| 12-7 | 141 | 0.19 | 0.07 | ○ |

### (Example 13)

A cemented carbide powder with a composition comprising, by weight, 90 % WC - 3 % TiCN - 1 % ZrC - 6 % Co was pressed, sintered in vacuum at 1400 °C for 1 hour and subjected to a surface-grinding treatment and cutting edge treatment to prepare a cemented carbide insert with a Form No. ISO and a shape of CNMG 120408. When a cross section of this cemented carbide was mirror-polished and its microstructure was observed by an optical miscroscope, it was confirmed that there could be formed a β-free layer of about 20 µm on the alloy surface and an area with a higher hardness than inside the alloy directly below the β-free layer, by measurement of a cross-sectional hardness distribution. This insert and the insert having no β-free layer on the alloy surface, prepared in Example 10, were coated with the same coated film as Sample 12-5 coated in Example 12.

Furthermore, the surface of this coated cemented carbide was subjected to a blasting treatment using an iron ball in an analogous manner to Example 10, while changing the size, projection speed, projection angle and projection time of the iron ball to prepare insert samples differing in cracked states in the coated films as shown in Table 26.

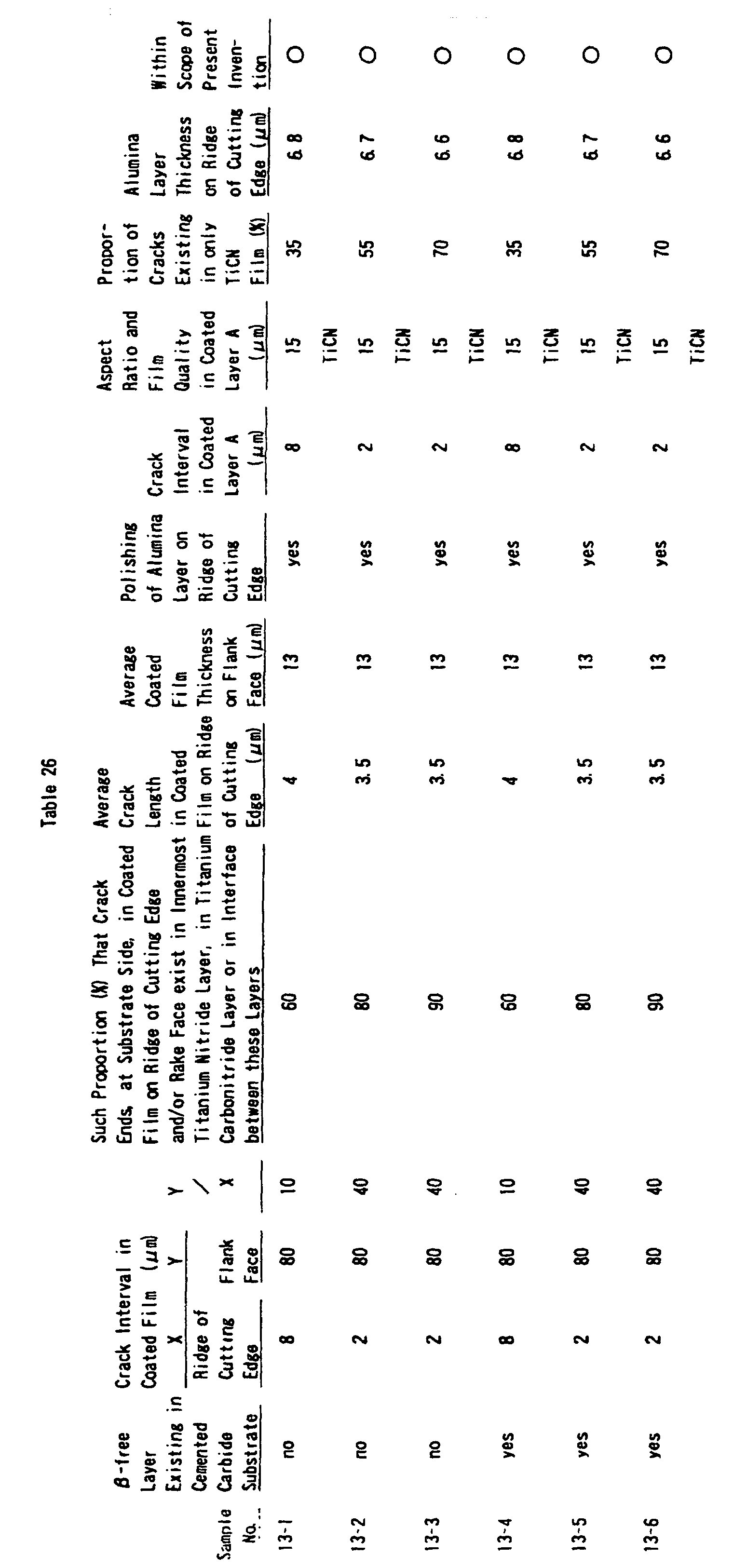

Using these inserts, Breakage Resistance Test 3 and Wear Resistance Tests 7 and 8 were then carried out in an analogous manner to Example 10 and 12. The results are shown in Table 27. The inserts of the present invention, Sample Nos. 13-1 to 13-6 all exhibit excellent breakage resistance as well as wear resistance and above all, Sample Nos. 13-4 to 13-6 each having a β -free layer on the alloy surface show more excellent breakage resistance and wear resistance, as compared with Sample Nos. 13-1 to 13-3 having no β -free layer. It is confirmed that above all, the inserts of Sample Nos. 13-5 and 13-6, in which the proportion of cracks existing in only the TiCN layer of columnar structure is at least 50 %, have particularly excellent breakage resistance and wear resistance.

**Table 27**

| Sample No. | Breakage Resistance Test 3 Life (sec) | Wear Resistance Test 7 Average Flank Wear Width (mm) | Wear Resistance Test 8 Average Flank Wear Width (mm) | Within Present Invention |
|---|---|---|---|---|
| 13-1 | 95 | 0.18 | 0.09 | ○ |
| 13-2 | 121 | 0.15 | 0.06 | ○ |
| 13-3 | 139 | 0.15 | 0.05 | ○ |
| 13-4 | 145 | 0.12 | 0.08 | ○ |
| 13-5 | 210 | 0.11 | 0.06 | ○ |
| 13-6 | 221 | 0.10 | 0.04 | ○ |

### (Example 14)

An insert of the same cemented carbide having a Form No. of ISO and a shape of CNMG 120408 as that of Example 13 was prepared. This insert was then coated with the following Coated Film Quality 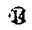 in order from the lower layer:
Film Quality 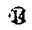 0.5 µm TiN - 5 µm TiCN - 0.3 µm TiBN - 9 µm alumina - 0.2 µm TiN
during which the crystal phases of alumina was changed into two kinds of κ (Sample Nos. 14-1, 14-2 and 14-3) and α (Sample Nos. 14-4, 14-5 and 14-6).

The TiCN layer was coated using acetonitrile and the crystal phase of the alumina layer was converted into κ and α by controlling the raw material gases. In addition, each sample of the resulting inserts was subjected to a treatment by a vibrating barrel to prepare various inserts differing in cracked state as shown in Table 28 (Sample Nos. 14-1 to 14-6). Using these inserts, the same cutting test as effected in Example 12 were carried out.

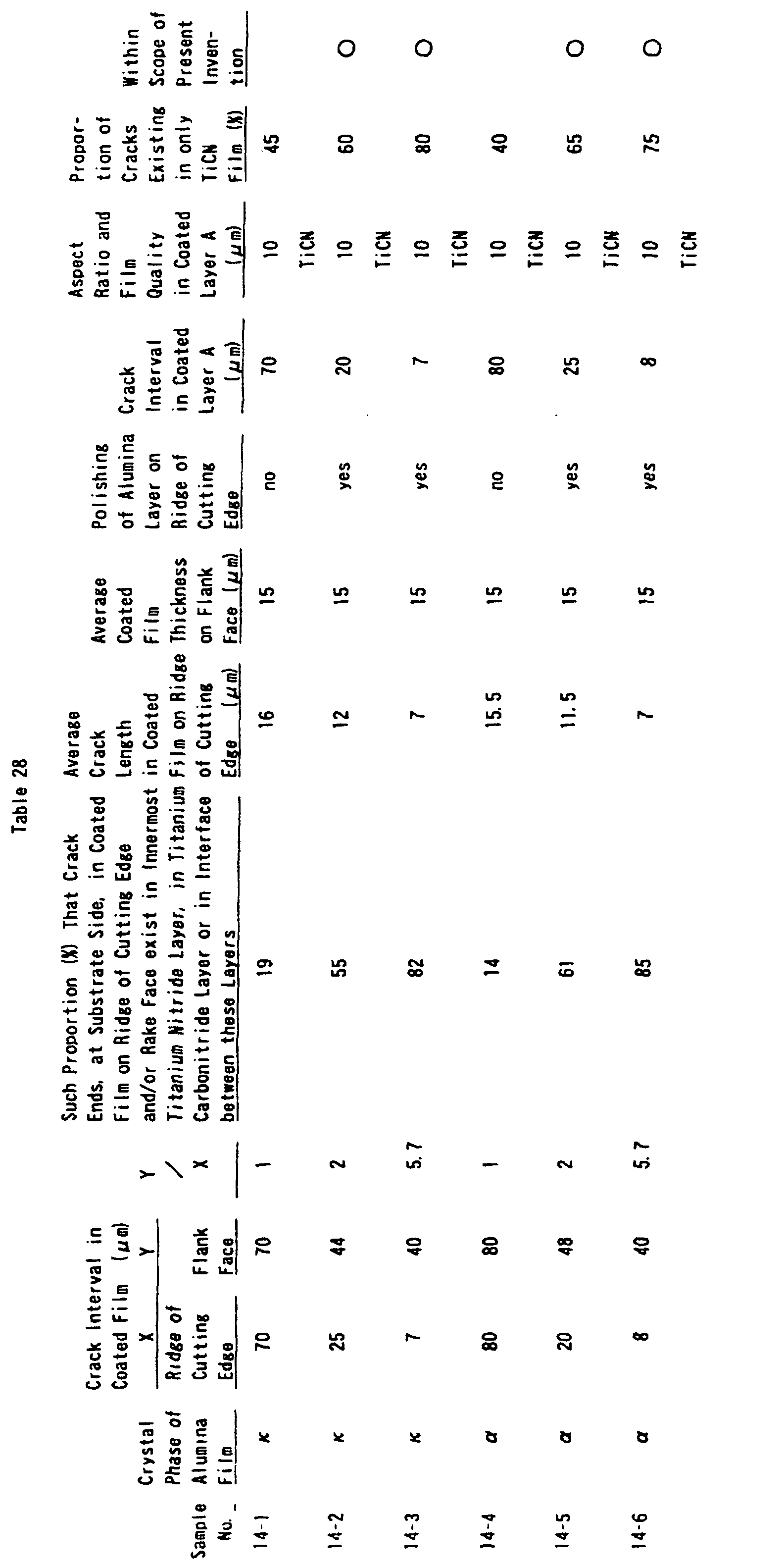

The results are shown in Table 29.

**Table 29**

| Sample No. | Breakage Resistance Test 3 Life (sec) | Wear Resistance Test 7 Average Flank Wear Width (mm) | Wear Resistance Test 8 Average Flank Wear Width (mm) | Within Present Invention |
|---|---|---|---|---|
| 14-1 | 3 | 0.29 | 0.24 | |
| 14-2 | 64 | 0.20 | 0.17 | ○ |
| 14-3 | 121 | 0.17 | 0.09 | ○ |
| 14-4 | 2 | 0.31 | 0.26 | |
| 14-5 | 89 | 0.20 | 0.14 | ○ |
| 14-6 | 187 | 0.15 | 0.05 | ○ |

It is apparent from this table that the inserts of the present invention, Sample Nos. 14-2, 14-3, 14-5 and 14-6 all exhibit excellent breakage resistance and wear resistance. Above all, the inserts of Sample Nos. 14-5 and 14-6, in which the crystal phase of alumina is of α-type, show excellent performances in all cutting tests and show excellent performances, in particular, in Breakage Resistance Test 3 using steel and Wear Resistance Test 8 of ductile cast iron.

### (Example 15)

An insert of the same cemented carbide having a Form No. of ISO and a shape of CNMG 120408 as that of Example 13 was prepared. This insert was then coated with the following Coated Film Quality 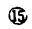 in order from the lower layer:
Film Quality 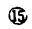 1.0 µm TiN - 8 µm TiCN - 0.5 µm TiBN - - 2µm α -alumina - 0.5 µm TiN

The TiCN layer was prepared by effecting the coating using acetonitrile as a starting gas to obtain a layer with an aspect ratio 10. In addition, the resulting insert was then subjected to a blasting treatment with an iron powder from the rake face side and flank face side, while changing the size and projection speed of the iron powder to prepare various inserts differing in cracked states, as shown in Table 30. Using these inserts, the same cutting test as that of Example 12 was carried out.

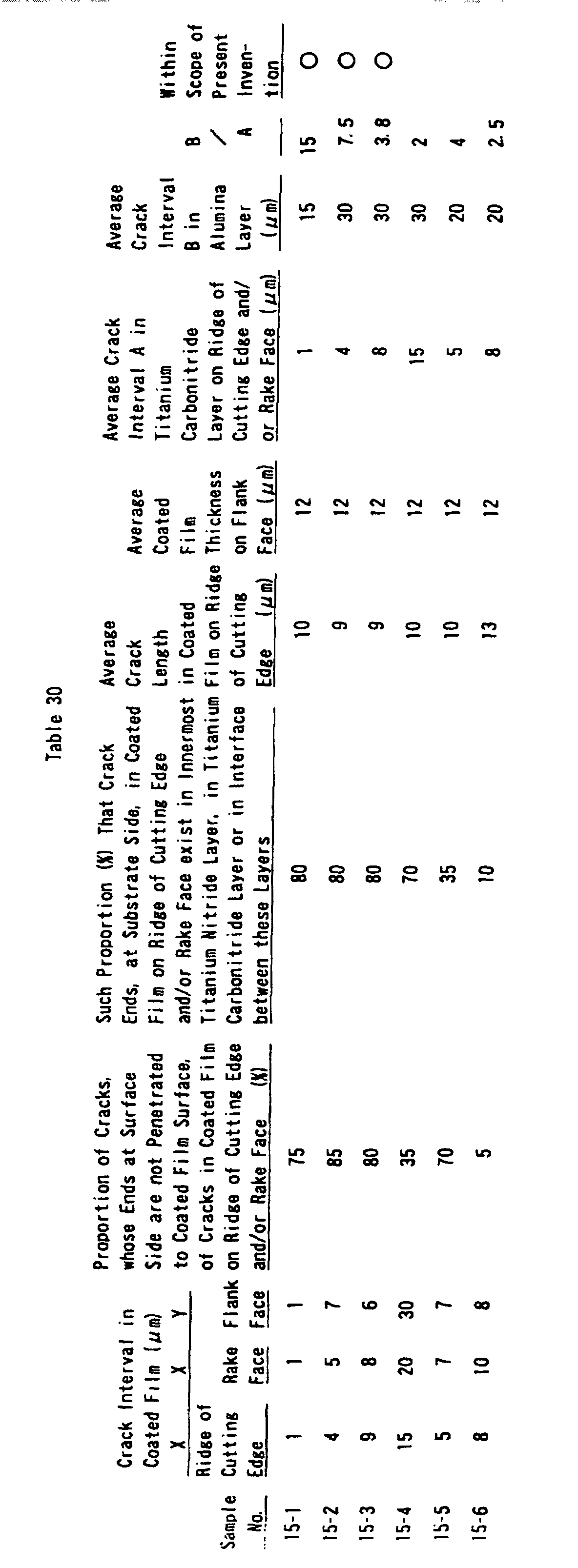

The results are shown in Table 31.

**Table 31**

| Sample No. | Breakage Resistance Test 3 Life (sec) | Wear Resistance Test 7 Average Flank Wear Width (mm) | Wear Resistance Test 8 Average Flank Wear Width (mm) | Within Present Invention |
|---|---|---|---|---|
| 15-1 | 265 | 0.23 | 0.06 | ○ |
| 15-2 | 243 | 0.28 | 0.08 | ○ |
| 15-3 | 216 | 0.27 | 0.09 | ○ |
| 15-4 | 92 | 0.38 | 0.23 | |
| 15-5 | 114 | 0.45 | 0.25 | |
| 15-6 | 183 | 0.59 | 0.31 | |

The inserts of the present invention, Sample Nos. 15-1, 15-2 and 15-3 all exhibit excellent breakage resistance as well as wear resistance, but Sample No. 15-4, in which at most 50 % of the ends of cracks at the surface side in the coated film are not penetrated to the surface of the coated film, Sample No. 15-5, in which at most 50 % of the ends of cracks at the substrate side exist in the innermost titanium nitride layer, in a layer above the titanium nitride layer or in an interface between these layers, and Sample No. 15-6, in which the average crack length in the coated film is larger than the average coated film thickness on the flank face are inferior to Sample Nos. 15-1, 15-2 and 15-3 with respect to the breakage resistance and wear resistance.

The present invention has exemplarily been illustrated by Examples, but is not intended to be limited thereby.

### Utility and Possibility on Commercial Scale

According to the present invention, there can be provided the coated cemented carbide tool capable of giving excellent breakage resistance and wear resistance by quantitatively specifying the crack interval and position of the ends of cracks in the coated layer on the cemented carbide.

## Claims

1. A coated cemented carbide cutting tool comprising a substrate consisting of a matrix of WC and a binder phase of an iron group metal and a plurality of coated layers provided on a surface of the substrate, in which (a) an innermost layer, adjacent to the substrate, of the coated layers consists essentially of titanium nitride having a thickness of 0.1 to 3 µm, (b) on a mirror-polished cross-sectional microstructure of the said tool, an average crack interval in the coated film on a ridge of a cutting edge and/or rake face is smaller than an average crack interval in the coated layer on a flank face, (c) at least 50 % of the cracks in the coated film on the said ridge of the cutting edge and/or rake face have ends of the cracks in the said innermost titanium nitride layer, in a layer above the titanium nitride layer or in an interface between these layers and (d) an average crack length of in the coated film on the said ridge of the cutting edge and/or rake face is shorter than an average coated film thickness on the flank face.

2. The coated cemented carbide cutting tool as claimed in Claim 1, wherein the interface between these layers is a interface between the innermost titanium nitride layer and the layer directly above the titanium nitride layer.

3. The coated cemented carbide cutting tool as claimed in Claim 1 or 2, wherein the said innermost titanium nitride layer is further coated with titanium carbonitride layer of columnar structure, with an aspect ratio of at least 5, having a thickness of 3 to 30 µm, and is further coated with at least one alumina layer of 0.5 to 10 µm.

4. The coated cemented carbide cutting tool as claimed in Claim 3, wherein at least 50 % of the cracks in the coated film on the said ridge of the cutting edge and/or rake face have ends of the cracks, at the substrate side, in the said innermost titanium nitride layer, in the said titanium carbonitride layer of columnar structure or in an interface between the said titanium nitride layer and the said titanium carbonitride layer of columnar structure.

5. The coated cemented carbide cutting tool as claimed in any one of Claims 1 to 4, wherein at least 80 % of the cracks in the coated film on the said ridge of the cutting edge and/or rake face have ends of the cracks, at the substrate side, in the said innermost titanium nitride layer, in the said titanium carbonitride layer of columnar structure or in an interface between the said titanium nitride layer and the said titanium carbonitride layer of columnar structure.

6. The coated cemented carbide cutting tool as claimed in Claim 1 or 2, wherein the said innermost titanium nitride layer is coated with alumina layer of 3 to 20 µm, further coated with titanium carbonitride layer of columnar structure with an aspect ratio of at least 5, having a thickness of 3 to 30 µm, and further coated with alumina layer of 0.5 to 10 µm.

7. The coated cemented carbide cutting tool as claimed in any one of Claims 1 to 6, wherein the average crack intervals in the coated film on the said ridge of the cutting edge and/or rake face is at most 10 µm.

8. The coated cemented carbide cutting tool as claimed in any one of Claims 1 to 7, wherein when a narrower average crack interval in the coated film of the ridge of the cutting edge or rake face on the said cross-sectional microstructure is X and an average crack interval in the coated film on the flank face is Y, a value of Y/X satisfies at least 2.

9. The coated cemented carbide cutting tool as claimed in any one of Claims 1 to 8, wherein at least 50 % of the ends of cracks, at the surface side, in the coated film on the said ridge of the cutting and/or rake face are not penetrated to the surface of the coated film.

10. The coated cemented carbide cutting tool as claimed in any one of Claims 3 to 9, wherein at least 50 % of the cracks in the coated film on the said ridge of the cutting edge and/or rake face exist in only the said titanium carbonitride layer of columnar structure and are not penetrated to the upper and lower coated layers thereof.

11. A coated cemented carbide cutting tool comprising a substrate consisting of a matrix of WC and a binder phase of an iron group metal and a plurality of coated layers provided on a surface of a substrate, in which (a) an innermost layer, adjacent to the substrate, of the coated layers consists essentially of titanium nitride having a thickness of 0.1 to 3 µm, which is further coated with at least one alumina layer of 0.5 to 10 µm, (b) on a mirror-polished cross-sectional microstructure of the tool, an average crack interval in the coated film on a ridge of a cutting edge is smaller than an average crack interval in the coated layer on a flank face, (c) at least 50 % of the cracks in the coated film on the said ridge of the cutting edge have ends of the cracks, at the substrate side, in the said innermost titanium nitride layer, in a layer above the titanium nitride layer or in an interface between these layers, (d) an average crack length in the coated film on the said ridge of the cutting edge is shorter than an average coated film thickness on the flank face and (e) at least one of the said alumina layers is removed or polished on at least a part of the ridge of the cutting edge.

12. The coated cemented carbide cutting tool as claimed in Claim 11, wherein the said innermost titanium nitride layer is coated with at least one titanium carbonitride layer of columnar structure with an aspect ratio of at least 5, having a thickness of 3 to 30 µm.

13. The coated cemented carbide cutting tool as claimed in Claim 12, wherein at least 50 % of the cracks in the coated film on the said ridge of the cutting edge have ends of the cracks, at the substrate side, in the said innermost titanium nitride layer, in the said titanium carbonitride layer of columnar structure or in an interface between the said titanium nitride layer and the said titanium carbonitride layer of columnar structure.

14. The coated cemented carbide cutting tool as claimed in any one of Claims 11 to 13, wherein at least 80 % of the cracks in the coated film on the said ridge of the cutting edge have ends of the cracks, at the substrate side, in the said innermost titanium nitride layer, in the said titanium carbonitride layer of columnar structure or in an interface between the said titanium nitride layer and the said titanium carbonitride layer of columnar structure.

15. The coated cemented carbide cutting tool as claimed in any one of Claims 11 to 14, wherein the average crack inerval in the coated film on the said ridge of the cutting edge is at most 10 µm.

16. The coated cemented carbide cutting tool as claimed in any one of Claims 11 to 15, wherein when an average crack interval in the coated film of the ridge of the cutting edge on the said cross-sectional microstructure is X and an average crack interval in the coated film on the flank face is Y, a value of Y/X satisfies at least 2.

17. The coated cemented carbide cutting tool as claimed in any one of Claims 11 to 16, wherein the crack interval in the surface-exposed coated layer A, where the said alumina layer has been removed, is 0.5 to 5µm

18. The coated cemented carbide cutting tool as claimed in any one of Claims 12 to 17, wherein the surface-exposed coated layer A, where the said alumina layer has been removed, consists of titanium carbonitride layer of columnar structure with an aspect ratio of at least 5, having a thickness of 3 to 30µm.

19. The coated cemented carbide cutting tool as claimed in any one of Claims 11 to 16, wherein the coated layer A provided with cracks whose intervals are in a range of 0.5 to 5 µm exists under the said alumina polished part.

20. The coated cemented carbide cutting tool as claimed in any one of Claims 12 to 17 or Claim 19, wherein the coated layer A existing under the said alumina-polished part consists of titanim carbonitride layer of columnar structure with an aspect ratio of at least 5, having a thickness of 3 to 30 µm.

21. The coated cemented carbide cutting tool as calimed in any one of Claims 12 to 20, wherein at least 50 % of the cracks in the coated film on the said ridge of the cutting edge exist on only the said titanium carbonitride layer of columnar structure and are not penetrated through the upper and lower coated layers thereof.

22. The coated cemented carbide cutting tool as claimed in any one of Claims 11 to 18 and Claims 21 to 22, wherein the said removed alumina layer essentially consists of κ-alumina.

23. The coated cemented carbide cutting tool as claimed in any one of Claims 11 to 16 and Claims 19 to 22, wherein the said polished alumina layer essentially consists of α-alumina.

24. A coated cemented carbide cutting tool comprising a substrate consisting of a matrix of WC and a binder phase of an iron group metal and a plurality of coated layers provided on a surface of the substrate, in which (a) an innermost layer, adjacent to the substrate, of the coated layers consists essentially of titanium nitride having a thickness of 0.1 to 3 µm, which is further coated with titanium carbonitride layer of columnar structure with an aspect ratio of at least 5, having a thickness of 3 to 30 µm, and further is coated with at least one alumina layer with a thickness of 0.5 to 10µm, (b) on a mirror-polished cross-sectional microstructure of the said tool, at least 50 % of ends of cracks at the surface side in the coated film on a ridge of a cutting edge and/or rake face are not penetrated to the surface of the coated film, (c) at least 50 % of the cracks in the coated film on the said ridge of the cutting edge and/or rake face have ends of the cracks, at the substrate side, in the said innermost titanium nitride layer, in a layer above the titanium nitride layer or in an interface between these layers and (d) an average crack length in the coated film on the said ridge of the cutting edge and/or rake face is shorter than an average coated film thickness on the flank face, (e) an average crack inerval in the said titanium carbonitride layer on the said ridge of the cutting edge and/or rake face is at most 10 µm and (f) an average crack interval in the said alumina film on the said ridge of the cutting edge and/or rake face is at least two times as large as an average crack interval in the said titanium carbonitride layer.

25. The coated cemented carbide cutting tool as claimed in Claim 24, wherein the said alumina layer is removed or polished on at least a part of the ridge of the cutting edge.

26. The coated cemented carbide cutting tool as claimed in any one of claims 1 to 10, 11 to 21 and 24 to 25, wherein the surface of the said cemented carbide substrate has a β-free layer.

27. The coated cemented carbide cutting tool as claimed in any one of Claims 1 to 26, wherein the sum of the thickness of the coated layers is in a range of 3 to 50 µm.

28. The coated cemented carbide cutting tool as claimed in any one of Claims 1 to 26, wherein the cracks in the coated film on the said ridge of the cutting edge are mechanically introduced after coating.

29. The coated cemented carbide cutting tool as claimed in any one of Claims 3 to 10 and Claims 12 to 25, wherein the said titanium carbonitride layer of columar structure is coated at 800 °C to 1000 °C by a CVD method comprising using an organo CN compound as a reactant gas.

## Patentansprüche

1. Mit Sinterkarbid beschichtetes Schneidwerkzeug umfassend ein Substrat bestehend aus einer Matrix aus WC und einer Bindemittelphase eines Metalls der Eisengruppe und einer Vielzahl von aufgebrachten Schichten, welche auf einer Oberfläche des Substrats bereitgestellt sind, wobei (a) eine innerste Schicht, neben dem Substrat, der aufgebrachten Schichten im wesentlichen aus Titannitrid mit einer Dicke von 0,1 bis 3 µm besteht, (b) in einem spiegelpolierten Querschnitt des Mikrogefüges des Werkzeuges ein mittlerer Rissabstand der aufgebrachten Schicht auf einem Grat (ridge) einer Schneidkante und/oder Spanfläche kleiner ist als der mittlere Abstand der Risse in der aufgebrachten Schicht auf einer Freifläche, (c) wenigstens 50 % der Risse in der aufgebrachten Schicht auf dem Grat der Schnittkante und/oder Spanfläche Enden der Risse in der innersten Titannitridschicht, in einer Schicht oberhalb der Titannitridschicht oder in einer Zwischenfläche zwischen diesen Schichten aufweisen und (d) eine mittlere Risslänge in der aufgebrachten Schicht auf dem Grat der Schnittkante und/oder Spanfläche ist kürzer als eine mittlere aufgebrachte Schichtdicke auf der Freifläche.

2. Mit Sinterkarbid beschichtetes Schneidwerkzeug nach Anspruch 1, wobei die Grenzfläche zwischen diesen Schichten eine Grenzfläche zwischen der innersten Titannitridschicht und der Schicht direkt oberhalb der Titannitridschicht ist.

3. Mit Sinterkarbid beschichtetes Schneidwerkzeug nach Anspruch 1 oder 2, wobei diese innerste Titannitridschicht des Weiteren mit Titancarbonitridschicht mit säulenartiger Struktur mit einem Aspektverhältnis von wenigstens 5, mit einer Dicke von 3 bis 30 µm, beschichtet ist und des weiteren mit wenigstens einer Aluminiumoxidschicht mit 0,5 bis 10 µm beschichtet ist.

4. Mit Sinterkarbid beschichtetes Schneidwerkzeug nach Anspruch 3, wobei wenigstens 50 % der Risse in der aufgebrachten Schicht auf dem Grat der Schnittkante und/oder der Spanfläche Enden von Rissen an der Substratseite, in der innersten Titannitridschicht, in der Titancarbonitridschicht mit säulenartiger Struktur oder in einer Grenzfläche zwischen der Titannitridschicht und der Titancarbonitridschicht mit säulenartiger Struktur, aufweisen.

5. Mit Sinterkarbid beschichtetes Schneidwerkzeug nach einem der Ansprüche 1 bis 4, wobei wenigstens 80 % der Risse in der aufgebrachten Schicht auf dem Grat der Schnittkante und/oder der Spanfläche Enden von Rissen an der Substratseite, in der innersten Titannitridschicht, in der Titancarbonitridschicht mit säulenartiger Struktur oder in einer Grenzfläche zwischen der Titannitridschicht und der Titancarbonitridschicht mit säulenartiger Struktur, aufweisen.

6. Mit Sinterkarbid beschichtetes Schneidwerkzeug nach Anspruch 1 oder 2, wobei die innerste Titannitridschicht mit einer Aluminiumoxidschicht mit 3 bis 20 µm beschichtet ist, des weiteren mit einer Titancarbonitridschicht mit säulenartiger Struktur mit einem Aspektverhältnis von wenigstens 5, und mit einer Dicke von 3 bis 30 µm beschichtet ist und des weiteren mit einer Aluminiumoxidschicht mit 0,5 bis 10 µm Dicke beschichtet ist.

7. Mit Sinterkarbid beschichtetes Schneidwerkzeug nach einem der Ansprüche 1 bis 6, wobei die mittleren Rissabstände in der aufgebrachten Schicht auf dem Grat der Schnittkante und/oder der Spanfläche höchstens 10 µm beträgt.

8. Mit Sinterkarbid beschichtetes Schneidwerkzeug nach einem der Ansprüche 1 bis 7, wobei ein engerer mittlerer Rissabstand in der aufgebrachten Schicht auf dem Grat der Schnittkante oder der Spanfläche in dem Querschnitt des Mikrogefüges X ist und ein mittlerer Rissabstand in der aufgebrachten Schicht auf der Freifläche Y ist, wobei ein Wert von X/Y wenigstens 2 erfüllt.

9. Mit Sinterkarbid beschichtetes Schneidwerkzeug nach einem der Ansprüche 1 bis 8, wobei wenigstens 50 % der Enden der Risse in der Oberflächenseite, in der aufgebrachten Schicht auf dem Grat der Schneidkante und/oder Spanfläche nicht bis zu der Oberfläche der aufgebrachten Schicht durchgedrungen sind.

10. Mit Sinterkarbid beschichtetes Schneidwerkzeug nach einem der Ansprüche 3 bis 9, wobei wenigstens 50 % der Risse in der aufgebrachten Schicht auf dem Grat der Schnittkante und/oder der Spanfläche nur in der Titancarbonitridschicht mit säulenartiger Struktur vorhanden sind und nicht zu dessen oberen und unteren aufgebrachten Schichten durchdringen.

11. Mit Sinterkarbid beschichtetes Schneidwerkzeug umfassend ein Substrat bestehend aus einer Matrix aus WC und einer Bindemittelphase aus einem Metall der Eisengruppe und einer Vielzahl von aufgebrachten Schichten, bereitgestellt auf einer Oberfläche eines Substrats, wobei (a) eine innerste Schicht, neben dem Substrat der aufgebrachten Schichten im wesentlichen aus Titannitrid besteht, mit einer Dicke von 0,1 bis 3 µm, welche des weiteren mit wenigstens einer Aluminiumoxidschicht mit 0,5 bis 10 µm beschichtet ist, (b) auf einem spiegelpolierten Querschnitt des Mikrogefüges des Werkzeuges ein mittlerer Rissabstand in der aufgebrachten Schicht auf einem Grat einer Schnittkante kleiner ist als ein mittlerer Rissabstand in der aufgebrachten Schicht auf einer Freifläche, (c) wenigstens 50 % der Risse in der aufgebrachten Schicht auf dem Grat der Schnittkante Enden von Rissen an der Substratseite, in der innersten Titannitridschicht, in einer Schicht oberhalb der Titannitridschicht oder in einer Grenzfläche zwischen diesen Schichten aufweisen, (d) eine mittlere Risslänge in der aufgebrachten Schicht auf dem Grat der Schnittkante kürzer ist als eine mittlere aufgebrachte Schichtdicke auf der Freifläche und (e) wenigstens eine der Aluminiumoxidschichten auf wenigstens einem Teil des Grates der Schnittkante entfernt oder poliert wird.

12. Mit Sinterkarbid beschichtetes Schneidwerkzeug nach Anspruch 11, wobei die innerste Titannitridschicht mit wenigstens einer Titancarbonitridschicht mit säulenartiger Struktur mit einem Aspektverhältnis von wenigstens 5, mit einer Dicke von 3 bis 30 µm beschichtet ist.

13. Mit Sinterkarbid beschichtetes Schneidwerkzeug nach Anspruch 12, wobei wenigstens 50 % der Risse in der aufgebrachten Schicht auf dem Grat der Schnittkante Enden von Rissen an der Substratseite, in der innersten Titannitridschicht, in der Titancarbonitridschicht mit säulenartiger Struktur oder in einer Grenzfläche zwischen der Titannitridschicht und der Titancarbonitridschicht mit säulenfartiger Struktur aufweisen.

14. Mit Sinterkarbid beschichtetes Schneidwerkzeug nach einem der Ansprüche 11 bis 13, wobei wenigstens 80 % der Risse in der aufgebrachten Schicht auf dem Grat der Schnittkante Enden von Rissen an der Substratseite, in der innersten Titannitridschicht, in der Titancarbonitridschicht mit säulenartiger Struktur oder in einer Grenzfläche zwischen der Titannitridschicht und der Titankarbonitridschicht mit säulenartiger Struktur aufweisen.

15. Mit Sinterkarbid beschichtetes Schneidwerkzeug nach einem der Ansprüche 11 bis 14, wobei der mittlere Rissabstand in der aufgebrachten Schicht auf dem Grat der Schnittkante höchstens 10 µm beträgt.

16. Mit Sinterkarbid beschichtetes Schneidwerkzeug nach einem der Ansprüche 11 bis 15, wobei ein mittlerer Rissabstand in der aufgebrachten Schicht des Grates der Schnittkante in dem Querschnittes des Mikrogefüges X ist und ein mittlerer Rissabstand in der aufgebrachten Schicht auf der Freifläche Y ist, wobei ein Wert von Y/X wenigstens 2 erfüllt.

17. Mit Sinterkarbid beschichtetes Schneidwerkzeug nach einem der Ansprüche 11 bis 16, wobei der Rissabstand in der aufgebrachten Schicht A, deren Oberfläche freigelegt ist, wobei die Aluminiumoxidschicht entfernt wurde, 0,5 bis 5 µm beträgt.

18. Mit Sinterkarbid beschichtetes Schneidwerkzeug nach einem der Ansprüche 12 bis 17, wobei die aufgebrachte Schicht A, deren Oberfläche freigelegt wurde, wobei die Aluminiumschicht entfernt wurde, aus Titancarbonitridschichten mit säulenartiger Struktur mit einem Aspektverhältnis von wenigstens 5, mit einer Dicke von 3 bis 30 µm besteht.

19. Mit Sinterkarbid beschichtetes Schneidwerkzeug nach einem der Ansprüche 11 bis 16, wobei die aufgebrachte Schicht A, welche mit Rissen versehen ist, deren Abstände in einem Bereich von 0,5 bis 5 µm liegen, unter dem polierten Aluminiumoxidteil vorhanden ist.

20. Mit Sinterkarbid beschichtetes Schneidwerkzeug nach einem der Ansprüche 12 bis 17 oder Anspruch 19, wobei die aufgebrachte Schicht A, welche unter dem polierten Aluminiumoxidteil vorhanden ist, aus Titancarbonitridschicht mit säulenartiger Struktur mit einem Aspektverhältnis von wenigstens 5, mit einer Dicke von 3 bis 30 µm, besteht.

21. Mit Sinterkarbid beschichtetes Schneidwerkzeug nach einem der Ansprüche 12 bis 20, wobei wenigstens 50 % der Risse in der aufgebrachten Schicht auf dem Grat der Schneidkante nur in der Titancarbonitridschicht mit säulenartiger Struktur vorhanden sind und nicht durch deren oberen und unteren aufgebrachten Schichten durchdringen.

22. Mit Sinterkarbid beschichtetes Schneidwerkzeug nach einem der Ansprüche 11 bis 18 und Ansprüche 21 bis 22, wobei die entfernte Aluminiumoxidschicht im wesentlichen aus κ-Aluminiumoxid besteht.

23. Mit Sinterkarbid beschichtetes Schneidwerkzeug nach einem der Ansprüche 11 bis 16 und Ansprüche 19 bis 22, wobei die polierte Aluminiumoxidschicht im wesentlichen aus α-Aluminium besteht.

24. Mit Sinterkarbid beschichtetes Schneidwerkzeug umfassend ein Substrat, bestehend aus einer Matrix aus WC und einer Bindemittelphase eines Metalls der Eisengruppe und einer Vielzahl von aufgebrachten Schichten, bereitgestellt auf einer Oberfläche des Substrats, wobei (a) eine innerste Schicht der neben dem Substrat aufgebrachten Schichten im wesentlichen aus Titannitrid besteht, mit einer Dicke von 0,1 bis 3 µm, welche des Weiteren mit einer Titancarbonitridschicht mit säulenartiger Struktur mit einem Aspektverhältnis von wenigstens 5, mit einer Dicke von 3 bis 30 µm beschichtet ist und des weiteren mit wenigstens einer Aluminiumoxidschicht mit einer Dicke von 0,5 bis 10 µm beschichtet ist, (b) auf einem spiegelpolierten Querschnitt des Mikrogefüges des Werkzeuges wenigstens 50 % der Enden der Risse an der Oberflächenseite in der aufgebrachten Schicht auf einem Grat der Schnittkante und/oder Spanfläche nicht bis zur Oberfläche der aufgebrachten Schicht durchdringen, (c) wenigstens 50 % der Risse in der aufgebrachten Schicht auf dem Grat der Schnittkante und/oder Spanfläche Enden von Rissen an der Substratseite, in der innersten Titannitridschicht, in einer Schicht oberhalb der Titannitridschicht oder in einer Grenzfläche zwischen diesen Schichten aufweisen und (d) eine mittlere Risslänge in der aufgebrachten Schicht auf dem Grat der Schnittkante und/oder Spanfläche kürzer ist als eine mittlere aufgebrachte Schichtdicke auf der Freifläche, (e) ein mittlerer Rissabstand in der Titancarbonitridschicht auf dem Grat der Schnittkante und/oder Spanfläche, höchstens 10 µm beträgt und (f) ein mittlerer Rissabstand in der Aluminiumoxidschicht auf dem Grat der Schnittkante und/oder Spanfläche wenigstens zweimal so groß ist wie ein mittlerer Rissabstand in der Titancarbonitridschicht.

25. Mit Sinterkarbid beschichtetes Schneidwerkzeug nach Anspruch 24, wobei die Aluminiumoxidschicht auf wenigstens einem Teil des Grates der Schnittkante entfernt oder poliert wird.

26. Mit Sinterkarbid beschichtetes Schneidwerkzeug nach einem der Ansprüche 1 bis 10, 11 bis 21 und 24 bis 25, wobei die Oberfläche des Sinterkarbidsubstrates eine β-freie Schicht aufweist.

27. Mit Sinterkarbid beschichtetes Schneidwerkzeug nach einem der Ansprüche 1 bis 26, wobei die Summe der Dicken der aufgebrachten Schicht in einem Bereich von 3 bis 50 µm liegt.

28. Mit Sinterkarbid beschichtetes Schneidwerkzeug nach einem der Ansprüche 1 bis 26, wobei die Risse in der aufgebrachten Schicht auf dem Grat der Schnittkante mechanisch nach dem Aufbringen eingebracht werden.

29. Mit Sinterkarbid beschichtetes Schneidwerkzeug nach einem der Ansprüche 3 bis 10 und 12 bis 25, wobei die Titancarbonitridschicht mit säulenartiger Struktur bei 800 °C bis 1.000 °C durch ein CVD-Verfahren aufgebracht wird, umfassend die Verwendung einer Organo CN-Verbindung als ein Reaktionsgas.

## Revendications

1. Outil de coupe en carbure cémenté revêtu comprenant un substrat composé d'une matrice de WC et d'une phase liante d'un métal du groupe du fer et une pluralité de couches de revêtement ménagées sur une surface du substrat, dans lequel (a) une couche la plus interne, adjacente au substrat, des couches de revêtement, est composée essentiellement de nitrure de titane ayant une épaisseur de 0,1 à 3 µm, (b) sur une microstructure en coupe transversale à poli spéculaire dudit outil, un intervalle de fissure moyen dans le film de revêtement sur une arête d'un bord de coupe et/ou une face de coupe est inférieur à un intervalle de fissure moyen dans la couche de revêtement sur une face de dépouille, (c) au moins 50 % des fissures dans le film de revêtement sur ladite arête du bord de coupe et/ou face de coupe ont les extrémités des fissures dans ladite couche de nitrure de titane la plus interne, dans une couche au-dessus de la couche de nitrure de titane ou dans une interface entre ces couches et (d) une longueur de fissure moyenne dans le film de revêtement sur ladite arête du bord de coupe et/ou face de coupe est inférieure à une épaisseur de film de revêtement moyenne sur la face de dépouille.

2. Outil de coupe en carbure cémenté revêtu selon la revendication 1, dans lequel l'interface entre ces couches est une interface entre la couche de nitrure de titane la plus interne et la couche directement au-dessus de la couche de nitrure de titane.

3. Outil de coupe en carbure cémenté revêtu selon la revendication 1 ou 2, dans lequel ladite couche de nitrure de titane la plus interne est en outre revêtue d'une couche de carbonitrure de titane de structure colonnaire, avec un rapport d'aspect d'au moins 5, ayant une épaisseur de 3 à 30 µm, et est en outre revêtue d'au moins une couche d'alumine de 0,5 à 10 µm.

4. Outil de coupe en carbure cémenté revêtu selon la revendication 3, dans lequel au moins 50 % des fissures dans le film de revêtement sur ladite arête du bord de coupe et/ou face de coupe ont les extrémités des fissures, sur le côté substrat, dans ladite couche de nitrure de titane la plus interne, dans ladite couche de carbonitrure de titane de structure colonnaire ou dans une interface entre ladite couche de nitrure de titane et ladite couche de carbonitrure de titane de structure colonnaire.

5. Outil de coupe en carbure cémenté revêtu selon l'une quelconque des revendications 1 à 4, dans lequel au moins 80 % des fissures dans le film de revêtement sur ladite arête du bord de coupe et/ou face de coupe ont les extrémités des fissures, sur le côté substrat, dans ladite couche de nitrure de titane la plus interne, dans ladite couche de carbonitrure de titane de structure colonnaire ou dans une interface entre ladite couche de nitrure de titane et ladite couche de carbonitrure de titane de structure colonnaire.

6. Outil de coupe en carbure cémenté revêtu selon la revendication 1 ou 2, dans lequel ladite couche de nitrure de titane la plus interne est revêtue d'une couche d'alumine de 3 à 20 µm, revêtue en outre d'une couche de carbonitrure de titane de structure colonnaire avec un rapport d'aspect d'au moins 5, ayant une épaisseur de 3 à 30 µm, et en outre revêtue d'une couche d'alumine de 0,5 à 10 µm.

7. Outil de coupe en carbure cémenté revêtu selon l'une quelconque des revendications 1 à 6, dans lequel l'intervalle de fissure moyen dans le film de revêtement sur ladite arête du bord de coupe et/ou face de coupe est au plus de 10 µm.

8. Outil de coupe en carbure cémenté revêtu selon l'une quelconque des revendications 1 à 7, dans lequel lorsqu'un intervalle de fissure moyen plus étroit dans le film de revêtement de l'arête du bord de coupe ou de la face de coupe sur ladite microstructure en coupe transversale est X et qu'un intervalle de fissure moyen dans le film de revêtement sur la face de dépouille est Y, une valeur de Y/X satisfait au moins 2.

9. Outil de coupe en carbure cémenté revêtu selon l'une quelconque des revendications 1 à 8, dans lequel au moins 50 % des extrémités des fissures, sur le côté surface, dans le film de revêtement sur ladite arête du bord de coupe et/ou face de coupe ne pénètrent pas dans la surface du film de revêtement.

10. Outil de coupe en carbure cémenté revêtu selon l'une quelconque des revendications 3 à 9, dans lequel au moins 50 % des fissures dans le film de revêtement sur ladite arête du bord de coupe et/ou face de coupe existent seulement dans ladite couche de carbonitrure de titane de structure colonnaire et ne pénètrent pas dans les couches de revêtement supérieures et inférieures à celle-ci.

11. Outil de coupe en carbure cémenté revêtu comprenant un substrat composé d'une matrice de WC et d'une phase liante d'un métal du groupe du fer et une pluralité de couches de revêtement ménagées sur une surface du substrat, dans lequel (a) une couche la plus interne, adjacente au substrat, des couches de revêtement, est composée essentiellement de nitrure de titane ayant une épaisseur de 0,1 à 3 µm, qui est en outre revêtue d'au moins une couche d'alumine de 0,5 à 10 µm, (b) sur une microstructure en coupe transversale à poli spéculaire de l'outil, un intervalle de fissure moyen dans le film de revêtement sur une arête d'un bord de coupe est inférieur à un intervalle de fissure moyen dans le film de revêtement sur une face de dépouille, (c) au moins 50 % des fissures dans le film de revêtement sur ladite arête du bord de coupe ont les extrémités des fissures, sur le côté substrat, dans ladite couche de nitrure de titane la plus interne, dans une couche au-dessus de la couche de nitrure de titane ou dans une interface entre ces couches, (d) une longueur de fissure moyenne dans le film de revêtement sur ladite arête du bord de coupe est inférieure à une épaisseur de film de revêtement moyenne sur la face de dépouille et (e) au moins une desdites couches d'alumine est retirée ou polie sur au moins une partie de l'arête du bord de coupe.

12. Outil de coupe en carbure cémenté revêtu selon la revendication 11, dans lequel ladite couche de nitrure de titane la plus interne est revêtue d'au moins une couche de carbonitrure de titane de structure colonnaire avec un rapport d'aspect d'au moins 5, ayant une épaisseur de 3 à 30 µm.

13. Outil de coupe en carbure cémenté revêtu selon la revendication 12, dans lequel au moins 50 % des fissures dans le film de revêtement sur ladite arête du bord de coupe ont les extrémités des fissures, sur le côté substrat, dans ladite couche de nitrure de titane, dans ladite couche de carbonitrure de titane de structure colonnaire ou dans une interface entre ladite couche de nitrure de titane et ladite couche de carbonitrure de titane de structure colonnaire.

14. Outil de coupe en carbure cémenté revêtu selon l'une quelconque des revendications 11 à 13, dans lequel au moins 80 % des fissures dans le film de revêtement sur ladite arête du bord de coupe ont les extrémités des fissures, sur le côté substrat, dans ladite couche de nitrure de titane, dans ladite couche de carbonitrure de titane de structure colonnaire ou dans une interface entre ladite couche de nitrure de titane et ladite couche de carbonitrure de titane de structure colonnaire.

15. Outil de coupe en carbure cémenté revêtu selon l'une quelconque des revendications 11 à 14, dans lequel l'intervalle de fissure moyen dans le film de revêtement sur ladite arête du bord de coupe est au plus de 10 µm.

16. Outil de coupe en carbure cémenté revêtu selon l'une quelconque des revendications 11 à 15, dans lequel lorsqu'un intervalle de fissure moyen dans le film de revêtement de l'arête du bord de coupe sur ladite microstructure en coupe transversale est X et qu'un intervalle de fissure moyen dans le film de revêtement sur la face de dépouille est Y, une valeur de Y/X satisfait au moins 2.

17. Outil de coupe en carbure cémenté revêtu selon l'une quelconque des revendications 11 à 16, dans lequel l'intervalle de fissure dans la couche de revêtement à surface exposée A où ladite couche d'alumine a été retirée est de 0,5 à 5 µm.

18. Outil de coupe en carbure cémenté revêtu selon l'une quelconque des revendications 12 à 17, dans lequel la couche de revêtement à surface exposée A où ladite couche d'alumine a été retirée est composée d'une couche de carbonitrure de titane de structure colonnaire avec un rapport d'aspect d'au moins 5 ayant une épaisseur de 3 à 30 µm.

19. Outil de coupe en carbure cémenté revêtu selon l'une quelconque des revendications 11 à 16, dans lequel la couche de revêtement A munie de fissures dont les intervalles sont dans une gamme de 0,5 à 5 µm existe sous ladite partie polie d'alumine.

20. Outil de coupe en carbure cémenté revêtu selon l'une quelconque des revendications 12 à 17 ou la revendication 19, dans lequel la couche de revêtement A existant sous ladite partie polie d'alumine est composée d'une couche de carbonitrure de titane de structure colonnaire avec un rapport d'aspect d'au moins 5 ayant une épaisseur de 3 à 30 µm.

21. Outil de coupe en carbure cémenté revêtu selon l'une quelconque des revendications 12 à 20, dans lequel au moins 50 % des fissures dans le film de revêtement sur ladite arête du bord de coupe existent uniquement sur la couche de carbonitrure de titane de structure colonnaire et ne pénètrent pas dans les couches supérieures et inférieures à celle-ci.

22. Outil de coupe en carbure cémenté revêtu selon l'une quelconque des revendications 11 à 18 et des revendications 21 à 22, dans lequel ladite couche d'alumine retirée est composée essentiellement d'alumine κ.

23. Outil de coupe en carbure cémenté revêtu selon l'une quelconque des revendications 11 à 16 et des revendications 19 à 22, dans lequel ladite couche d'alumine polie se compose essentiellement d'alumine α.

24. Outil de coupe en carbure cémenté revêtu comprenant un substrat composé d'une matrice de WC et d'une phase liante d'un métal du groupe fer et une pluralité de couches de revêtement ménagées sur une surface du substrat, dans lequel (a) une couche la plus interne, adjacente au substrat, des couches de revêtement, est composée essentiellement de nitrure de titane ayant une épaisseur de 0,1 à 3 µm, qui est en outre revêtue d'une couche de carbonitrure de titane de structure colonnaire avec un rapport d'aspect d'au moins 5, ayant une épaisseur de 3 à 30 µm, et est en outre revêtue d'au moins une couche d'alumine d'une épaisseur de 0,5 à 10 µm, (b) sur une microstructure en coupe transversale à poli spéculaire dudit outil, au moins 50 % des extrémités des fissures sur le côté surface dans le film de revêtement sur une arête d'un bord de coupe et/ou une face de coupe ne pénètrent pas dans la surface du film de revêtement, (c) au moins 50 % des fissures dans le film de revêtement sur ladite arête du bord de coupe et/ou face de coupe ont les extrémités des fissures, sur le côté substrat, dans ladite couche de nitrure de titane la plus interne, dans une couche au-dessus de la couche de nitrure de titane ou dans une interface entre ces couches et (d) une longueur de fissure moyenne dans le film de revêtement sur ladite arête du bord de coupe et/ou face de coupe est inférieure à une épaisseur de film de revêtement moyenne sur la face de dépouille, (e) un intervalle de fissure moyen dans ladite couche de carbonitrure de titane sur ladite arête du bord de coupe et/ou face de coupe est au plus de 10 µm et (f) un intervalle de fissure moyen dans ledit film d'alumine sur ladite arête du bord de coupe et/ou face de coupe est au moins le double d'un intervalle de fissure moyen dans ladite couche de carbonitrure de titane.

25. Outil de coupe en carbure cémenté revêtu selon la revendication 24, dans lequel ladite couche d'alumine est retirée ou polie sur au moins une partie de l'arête du bord de coupe.

26. Outil de coupe en carbure cémenté revêtu selon l'une quelconque des revendications 1 à 10, 11 à 21 et 24 à 25, dans lequel la surface dudit substrat de carbure cémenté a une couche sans β.

27. Outil de coupe en carbure cémenté revêtu selon l'une quelconque des revendications 1 à 26, dans lequel la somme de l'épaisseur des couches de revêtement est dans une gamme de 3 à 50 µm.

28. Outil de coupe en carbure cémenté revêtu selon l'une quelconque des revendications 1 à 26, dans lequel les fissures dans le film de revêtement sur ladite arête du bord de coupe sont introduites mécaniquement après le revêtement.

29. Outil de coupe en carbure cémenté revêtu selon l'une quelconque des revendications 3 à 10 et des revendications 12 à 25, dans lequel ladite couche de carbonitrure de titane de structure colonnaire est déposée entre 800 °C et 1000 °C par un procédé de dépôt chimique en phase vapeur comprenant l'utilisation d'un composé organo-CN comme gaz réactif.
